(19) Europäisches Patentamt
European Patent Office
Office européen des brevets

(11) Publication number: **0 267 992 A1**

(12) **EUROPEAN PATENT APPLICATION**

(21) Application number: **86308942.1**

(51) Int. Cl.⁴: **F01K 25/10**, F03G 7/04

(22) Date of filing: **17.11.86**

(43) Date of publication of application: **25.05.88 Bulletin 88/21**

(84) Designated Contracting States: **AT BE CH DE ES FR GB GR IT LI NL SE**

(71) Applicant: **Minovitch, Michael Andrew**
**2832 St George Street, Apartment 6**
**Los Angeles California 90027(US)**

(72) Inventor: **Minovitch, Michael Andrew**
**2832 St George Street, Apartment 6**
**Los Angeles California 90027(US)**

(74) Representative: **Enskat, Michael Antony Frank et al**
**Saunders & Dolleymore 2 Norfolk Road**
**Rickmansworth Hertfordshire WD3 1JH(GB)**

# (54) Condensing atmospheric engine and method.

(57) A thermodynamic method and engine is provided for extracting heat energy from the natural environment at ambient temperature and converting it into mechanical work. The extraction and conversion process is accomplished by compressing liquefied air at cryogenic temperature to very high pressure and feeding it through a plurality of serially connected heat exchangers (62,66,70) maintained in thermal contact with the natural environment, and a like plurality of expanders (64,68,72) interposed between adjacent heat exchangers. Each expander converts the natural heat energy absorbed in the preceding heat exchanger into mechanical work. Condensation is obtained by isentropically expanding cold, partially compressed vapor discharged from the last expander (72) into a thermally insulated vacuum chamber (30). By employing sufficiently high expansion ratios, a large fraction of the vapor can be made to undergo spantaneous condensation into the solid phase. The solidified air is withdrawn from the vacuum chamber, melted, recompressed and recycled back through the ambient heat exchangers to extract more natural heat energy for conversion into more mechanical work. The high entropy noncondensed vapor is removed from the vacuum chamber, replaced with lower entropy air taken from the atmosphere and recycled back through the condensing expander such that the amount of air condensed remains unchanged.

Fig.5

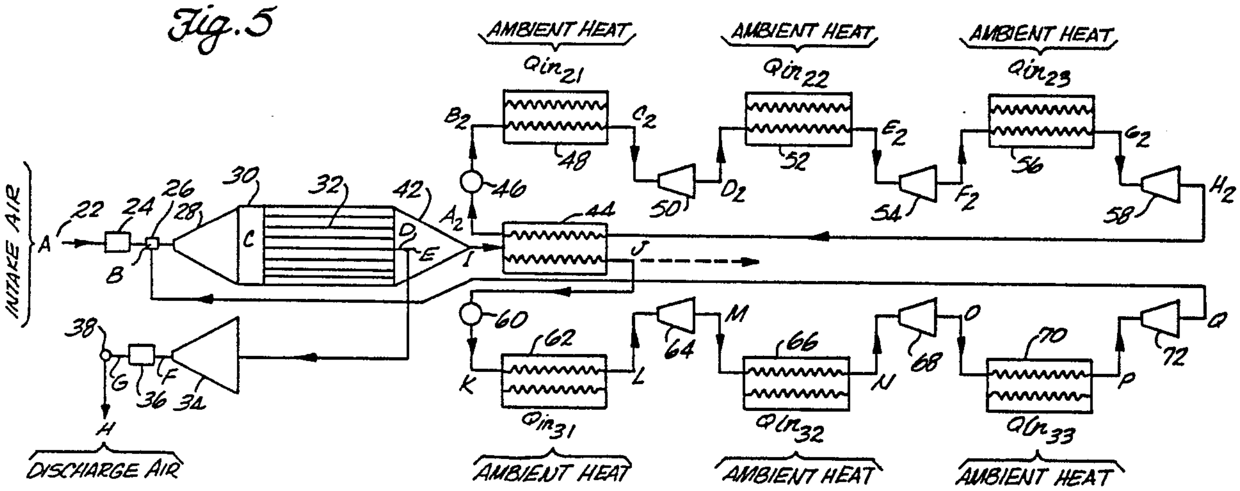


EP 0 267 992 A1

# CONDENSING ATMOSPHERIC ENGINE AND METHOD

## Background

For hundreds of years, engineers and scientists have recognized that the ambient thermal energy of the natural environment that is heated by the sun contains vast amounts of free thermal energy. Up to the beginning of the 20th century, all attempts to harness this natural reservoir of free thermal energy by converting it into mechanical work by a cyclic heat engine had failed. Consequently, since the theoretical foundation of thermodynamics was laid down during the 19th century, many scientists during that time period believed that such engines were thermodynamically impossible. In fact, some versions of the second law of thermodynamics (which in itself based on empirical observations) were actually stated by enunciating the impossibility of such engines. For example, see the book, Physics, Ginn and Company, 1924, by Oscar Stewart where, on page 246, the author states the second law as: "It is impossible to operate continuously any machinery by heat energy obtained from bodies the temperature of which is equial to or lower than that of surrounding bodies." Since all heat engines operating on the Earth's surface are surrounded by bodies of the natural environment at ambient temperature such as the atmosphere and the ground, or the sea, this statement declares that heat engines that operate by converting natural heat energy of the surrounding environment at ambient temperature into mechanical work are impossible. Such ambient heat engines were believed to be "perpetual motion machines" because they could, in principle, operate forever.

However, in 1944, an American named Arthur Hillery invented a cyclic heat engine that did convert natural thermal energy of the surrounding environment into mechanical work. The design of the engine was based upon utilizing a liquid that is easily vaporizable at ordinary ambient temperature (such as Acetone or Freon) as a closed cycle working fluid and generating an artificial low temperature heat reservoir below ambient by evaporating ordinary water. The re sulting thermal potential difference between the high temperature heat reservoir, which was represented by the surrounding environment at ambient temperature, and the artificially created low temperature heat reservoir, was converted into mechanical work by applying elementary principles of thermodynamics. The existence of this engine proved --beyond any doubt --that it is indeed possible to construct a cyclic condensing heat engine that operates with a high temperature heat reservoir equal to ambient temperature and converts natural thermal energy of the environment into mechanical work.

Unfortunately, the thermal potential difference that can be artificially created by evaporating water relative to the ambient temperature of the surrounding environment is not very great. Consequently, the overall thermal efficiency of Hillery's engine is very low which limits the power-to-weight ratio. Thus, most of the practical applications of these ambient heat engines were confined to small novelties such as the perpetually operating "drinking bird" found in novelty shops. In fact, Hillery called his invention an "Activated Amusement Device". See his U.S. Patent No. 2,384,168 filed June 10, 1944.

It should be noted that another American named Miles Sullivan was also working on ambient heat engines during the early 1940's. However, as in the case of Hillery, he also viewed his engine as a toy. See his U.S. Patent No. 2,402,463 entitles "Novelty Device", filed August 6, 1945. The design of this engine was essentially identical to Hillery's.

Although the overall thermal efficienty of these ambient heat engines is inherently low, their net power output can be increased by scaling up their physical dimensions. Consequently, in view of the fact that these engines require no fuel and can be operated indefinitely to generate an unlimited amount of free output work, the United States Navy developed Hillery's engine into a useful power plant to operate various mechanical devices. See, U.S. Patent No. 2,597,890 entitled "Rotary Power Unit Operable on Atmospheric Energy", filed December 20, 1949 by Ivan Monk.

In 1966, Richard Murrow proposed developing scaled up versions of Hillery's ambient heat engine for pumping water from the Nile River. See Rand Corporation Technical Report No. P - 3367 entitled, A Simple Heat Engine of Possible Utility in Primitive Environments, August 1966. An actual scaled up working model of Hillery's ambient heat engine was constructed to a height of seven feet and found to be able to generate considerable mechanical work. See the article, "The Research Frontier --Where Is Science Taking Us," Saturday Review, Vol. 50, June 3, 1967, pp. 51-55, by Richard Murrow.

The basic thermodynamic operating principles of these ambient heat engines were analyzed by Carl Bachhuber in his paper, "Energy From the Evaporation of Water," American Journal of Physics, Vol. 51, No. 3, March 1983, pp. 259-264. In particular, Bachhuber showed that ordinary water can be used to extract an unlimited amount of natural thermal energy from the surrounding environment and converted into mechanical work. Moreover, Bachhuber has shown that the specific energy of ordinary water at ambient temperature that can be converted into useful mechanical work by these engines is approximately twice the specific energy available in automative storage batteries. Thus, in principle, large engines of this type could be used to propel ocean going vessels indefinitely using ordinary sea water for generating an unlimited amount of mechanical work. Although this possibility may appear to be thermodynamically impossible, it is not impossible. The existance of these engines proves that it is indeed possible to convert natural heat energy of the environment at ambient temperature into an unlimited amount of mechanical work by a cyclic heat engine without violating any of the laws of thermodynamics by utilizing a suitable working fluid that is vaporizable at ambient temperatures and by creating an artificial low temperature heat reservoir below ambient.

It is clear that the second law of thermodynamics as stated by Stewart in his book published in 1924 must be incorrect because Hillery's engine is operable, but violates that statement. At the present time, the Kelvin-Planck statement of the second law is the most popular among engineers. This statement reads: "It is impossible for any device to operate in a cycle and produce work while exchanging heat only with bodies at a single fixed temperature." Consequently, by designing a cyclic heat engine that is capable of generating an artificial heat reservoir below ambient, it will always be possible to harness the natural heat energy of the surrounding environment and convert a portion of it into a net amount of useful mechanical output work without violating the second law of thermodynamics.

Hillery's ambient heat engine generates its low temperature heat reservoir by evaporating ordinary water. But since the amount of cooling that can be generated by this method is not very great, the overall theraml efficiency of these engines is not very high. Therefore, the power densities are too low for propelling vehicles or for operating large electric power plants.

The object of the present invention is to provide a more powerful ambient heat engine that is capable of propelling vehicles or for generating bulk electric power.

The ambient heat engine disclosed in this application is based on my U.S. Patent Application, Serial No. 522,847, filed August 12, 1983, now U.S. Patent No. 4,624,109 entitled "Condensing Atmospheric Engine and Method."

## Brief Summary Of The Invention

With the foregoing in mind the present invention provides a selfsustaining condensing heat engine and method for operating same that extracts a portion of the natural thermal energy of the natural environment at ordinary ambient temperatures and converts it directly into mechanical work. The basic operating principles involve utilizing a "permanent gas" as a condensing cryogenic working fluid with a critical temperature significantly below ambient. This enables the operating temperature range of the engine to be shifted downward into the cryogenic region. Consequently, instead of viewing and utilizing the natural environment as an unlimited low temperature heat sink for absorbing the latent heat of condensation in a condenser as in most prior art condensing heat engines, it is viewed and utilized in the present invention as an unlimited high temperature heat reservoir that can be harnessed to generate an unlimited amount of mechanical work.

In the preferred embodiment of this invention, liquefied air at about 80° K is compressed to a very high initial pressure (on the order of 300 Atm) and fed into a plurality of serially connected heat exchangers in thermal contact with the natural environment at ambient temperature, and a like plurality of cryogenic expanders interposed between adjacent heat exchangers. The high pressure liquefied air entering the first heat exchanger creates a significant temperature gradient across the thermal surfaces and a large amount of natural heat energy is extracted from the natural environment at ambient temperature and rapidly absorbed by the circulating air. The liquefied air is isobarically heated above its critical temperature (133°K) and is therefore completely vaporized into a super high pressure gas (exceeding 4,400 $lbs/in^2$). Before leaving the first ambient heat exchanger, it is superheated to about the natural temperature of the ambient environment. Unlike prior art condensing heat engines, this input thermal energy entering the ambient heat exchanger is free, inexhaustible and nonpolluting.

The cryogenic working fluid emerges from the first heat exchanger as a super high pressure, superheated gas at about ambient temperature. It is then fed into the first isentropic expender where a large fraction of the natural thermal energy extracted from the environment by the first heat exchanger is converted into mechanical work. The pressure ratio of the first expander is such that the outlet pressure of the expanded air leaving the expander is still fairly high. Thus, since the expansion process reduces the temperature of the exhaust air significantly below ambient, it is fed into another ambient heat exchanger that is also maintained in thermal contact with the natural environment in order to extract still more natural thermal energy from the environment, After this second isobaric heating process, the pressurized air is withdrawn from the second ambient heat exchanger at about ambient temperature and injected into another isentropic expander where a large portion of the natural thermal energy extracted from the environment while circulating through the second ambient heat exchanger is converted into additional mechanical work. As in the previous expansion process, the pressure ratio of the second expander is designed to allow the low temperature exhaust air leaving the second expander to still have a relatively high pressure in order to extract and convert still more natural thermal energy into mechanical work by repeating the above steps in succeeding, serially connected isobaric ambient heat exchangers and isentropic expanders. Since the amount of mechanical work consumed by compressing the liquefied cryogenic working fluid to the initial working pressure (on the order of 300 Atm) is negligible compared to the amount of mechanical output work generated by the various isentropic expanders, the net amount of output work generated by this process is exceedingly high.

The last expander in the series is designed to have an exhaust pressure $P_1$ approximately equal to ambient atmospheric pressure (1.0 Atm or 14.7 lbs/in$^2$). The temperature of this exhaust air is very low and is fed into a thermally insulated cold air mixing vessel where it is mized with a portion of precooled new air taken from the natural atmosphere. This mixing vessel represents a reservoir of partially compressed cold gaseous air at pressure $P_1$ that is fed directly into a thermally insulated cryogenic condensing system.

The cryogenic condensing system represents the heart of the engine and is the most important system. It is designed as an evacuated expansion system capable of generating enormous and essentially unlimited isentropic expansion ratios. The expanded vapor is discharged into a condensing chamber maintained at very low pressure. With this system the random motion of the individual gas molecules is slowed down to such low levels (by transferring kinetic energy to the movable member of the expander) that their kinetic energy is no longer able to resist the natural intermolecular attractive foces (van der Waals forces) and a large fraction of them undergo spontaneous condensation directly into the solid phase inside the thermally insulated condensing chamber. Thus, this isentropic expansion system reduces the partially compressed cold air inside the cold air reservoir vessel to a highly supersaturated metastable vapor such that a large fraction of the vapor undergoes spontaneous condensation directly into the solid phase essentially without having to remove any latent heat of condensation by any other separate system. That fraction of the expanded vapor which does not condense has a relatively high entropy. It is removed from the vacuum chamber, recompressed back to the initial pressure $P_1$ and discharged into the open atmosphere.

If the noncondensed air vapor is recompressed back to the initial pressure $P_1$ by an isentropic process, the resulting discharge temperature would be well above ambient and the amount of mechanical work required to perform this isentropic recompression would exceed that gained from the initial expansion. This is because the noncondensed air vapor has a much higher entropy than the preexpanded air at ambient temperature and pressure. However, by utilizing the natural environment as a heat sink, the recompression process can take place in several stages, separated by heat exchangers that cool the air to about ambient temperature. Thus, the complete recompression process is not carried out isentropically and the amount of mechanical work needed to recompress the noncondensed air back to ambient atmospheric pressure can be significantly reduced.

An equal amount of new air is ingested from the natural atmosphere at a lower entropy, cooled to a lower temperature (and lower entropy) and fed into the low temperature gas mixing vessel where it is mixed with previously expanded air vapor at very low temperature and fed into the condensing expander. The new ingested air taken from the ambient atmosphere enables the condensing system to generate a continuous, non-diminishing supply of condensed air at very low cyrogenic temperatures.

One of the important operating features of this condensing system is the fact that the condensation is achieved directly from the isentropic expansion step which is simultaneously used to generate additional mechanical work. The mechanical work expended by removing the noncondensed air from the vacuum chamber and recompressing it back to the initial pressure $P_1$ does not exceed that gained from the expansion step because there is always more air expanded than is recompressed. Thus, this condensing system does not require any external heat sink to absorb latent heat of condensation, not does it require the expenditure of mechanical work. The condensing system will be referred to as the "first stage" of my condensing atmospheric engine.

Although it is thermodynamically impossible to condense 100% of the expanded vapor by any direct isentropic expansion process no matter how high the expansion ratio may be if the initial pressure $P_1$ is on the order of only 1.0 Atm, it is possible to condense a significant fraction of the low pressure air if the preexpansion temperature is 200°K and if the expansion ratio is extremely high (on the order of 300). Under these conditions, the expansion reduces the temperature of the vapor below the triple point and the condensation is characterized by spontaneous solidification directly into the solid phase. No attempt is made to condense the remaining portion of the expanded air which does not condense by this expansion process because this would require extracting latent heat of condensation by some external low temperature heat sink.

In order to initiate the condensation process, the condensing surfaces inside the condensing chamber are precooled to a temperature slightly below the temperature of the supersaturated air vapor by circulating small amounts of liquid hydrogen that is maintained in thermal contact with the condensing surfaces. The internal walls of the expander and vacuum chamber are also precooled to cryogenic temperatures. Highly effective multilayer cryogenic thermal insulation is provided for the walls of the expander and vacuum chamber for minimizing heat flow from the ambient environment.

After the condensing process has been continued for a short time period, the condensing surfaces inside the vacuum chamber become coated with a layer of previously condensed solidified air particles. These previously condensed solidified air particles act a condensing surfaces for condensing newly expanded metastable air (i.e., they act as nucleation surfaces). The process quickly becomes self-sustaining and very little heat is transferred to the liquefied hydrogen coolant. Since the expanded air vapor immediately prior to the condensation is supersaturated and metastable, condensation is spontaneous and there is essentially no latent heat of condensation that must be removed and absorbed by the condensing surfaces. The condensing surfaces are merely nucleation sites where the solidified air particles are accumulated for collection. The solidified air particles are easily collected from these surfaces by scaping off the top layer with little expenditure of mechanical work.

The condensation produces an implosion effect inside the condensing chamber thereby creating a partial vacuum which reduces the amount of mechanical work required to pump out the noncondensed air. The work required to remove the solidified air from the condensing chamber and compress it to $P_1$ is negligible.

Since the expanded air vapor entering the thermally insulated vacuum chamber and the previously solidified air already inside the chamber is very cold, the engine generates its own low temperature environment as it operates. The greater the expansion ratio, the lower the temperature. Aside from the relatively small amount of liquid hydrogen used to precool the system and initiate the condensation process, no external low temperature heat sink is required. Therefore no mechanical work has to be expended to maintain the low temperature environment of the vacuum chamber.

Since the entropy of the noncondensed air vapor after the expansion is greater than the entropy of the ambient atmosphere, the recompressed air is expelled from the engine and replaced with air taken from the natural atmosphere. This enables the entropy of the air prior to expansion to be relatively low in order to maximize the condensation ratio. The expelled high entropy air is balanced by the solidified low entropy air left inside the engine thereby maintaining the low temperature environment. Thus, the condensing system generates low entropy solidified air and expels high entropy gaseous air. The condensing system can therefore be viewed as an "entropy pump."

Another important feature of this invention involves harnessing the thermal potential difference between the very cold solidified air and the warmer liquefied air prior to compressing the liquefied air back to the very high initial working pressure. This is accomplished by removing the very cold solidified air from the condensing chamber and utilizing it as a low temperature heat sink for a closed cycle second stage condensing cryogenic engine while it is being melted into the liquid state. Thus, the solidified air is removed from the condensing chamber and fed into a second stage condenser where it absorbs the latent heat of condensation from expanded second stage cryogenic working fluid. Consequently, the solidified air is heated to liquefied air at a higher temperature while the expanded saturated vapor of the second stage is simultaneously condensed to a cryogenic liquid.

Since the cryogenic working fluid of the closed cycle second stage engine has a critical temperature significantly below the ambient temperature of the natural environment, the high temperature heat reservoir of this second state engine is the natural heat energy of the ambient environment. Thus, after the second stage working fluid is liquefied by passing through the second stage condenser, it is compressed to a very high initial working pressure (on the order of 300 Atm) and fed into a series of ambient heat exchangers and expanders similar to that described above to extract and convert additional natural thermal energy of the ambiant environment into mechanical work. This second stage engine significantly increases the total net output work of the entire engine.

The liquefied air leaving the second stage condenser is compressed to a very high working pressure (on the order of 300 Atm) and fed into its own series of ambient heat exchangers and expanders to extract and convert additional natural thermal energy into mechanical work (as described above). This step will be referred to as the "third stage" of my condensing atmospheric engine. It is the most powerful stage in terms of net output work.

Drawings

These and other advantages and features of the present invention will be apparent from the disclosure, which includes the specification, the claims and the accompanying drawings wherein:

Fig. 1 is a composite graph of the temperature/pressure phase diagrams of nitrogen, oxygen and ordinary atmospheric air at cryogenic temperatures near their triple points;

Fig. 2 is a composite graph of the threshold expansion ratios that are required for achieving partial phase transformation of atmospheric air via adiabatic expansion beginning at standard atmospheric pressure and various initial temperatures;

Fig. 3 is a Temperature-Entropy diagram of atmospheric air illustrating the proportional amount of ambient atmospheric air that undergoes spontaneous solidification into the solid phase by an initial isentropic expansion with very high expansion ratios;

Fig. 4 is a composite graph of the phase transformation ratio of air versus expansion ratio corresponding to various initial air temperatures with an initial pressure equal to standard atmospheric pressure;

Fig. 5 is a block diagram of a multiple stage air-powered condensing atmospheric engine corresponding to one embodiment of the present invention;

Fig. 6 is a Temperature-Entropy diagram of atmospheric air illustrating the basic thermodynamic operating principles of the air-powered condensing atmospheric engine corresponding to the block diagram of Fig. 5;

Fig. 7 is a Temperature-Pressure phase diagram of atmospheric air further illustrating the basic thermodynamic operating principles of the condensing atmospheric engine corresponding to the block diagram of Fig. 5;

Fig. 8 is a schematic longitudinal perspective view illustrating the design, construction and operating principles of a low pressure turbine expander, vacuum chamber, solid phase condenser, and solid phase recompressor for the first stage of an atmospheric engine;

Fig. 9 is a schematic transverse cross section further illustrating the design and construction of a low pressure axial flow turbine expander and one of its spiraling expansion blades;

Fig. 10 is a schematic longitudinal perspective view illustrating the design and construction of a low pressure turbine recompressor that is driven by the turbine expander of Fig. 8;

Fig. 11 is a schematic transverse cross section illustrating the design, construction and operating principles of the solid phase air condenser;

Fig. 12 is an enlarged longitudinal cross section through the end portion of one solid phase condensing tube illustrating the design and construction of a discharge passageway for the gaseous expanded air vapor that does not condense after passing through the condensing tube;

Fig. 13 is a block diagram illustrating a closed cycle embodiment of the first stage condensing engine; and

Fig. 14 is a block diagram illustrating a pressure vessel interposed between an ambient heat exchanger and an expander for energy storage; load leveling and instant power.

Description of the Preferred Embodiment

The underlying theoretical feasibility of my condensing atmospheric engine rests upon the possibility of achieving a self-induced, spontaneous phase transformation with ordinary ambient air by an isentropic expansion process inside a low temperature vacuum chamber starting from standard atmospheric temperature and pressure. This possibility can in fact be accomplished which can be demonstrated by referring to the graphs of Fig. 1. This figure contains Pressure-Temperature phase diagrams of nitrogen, oxygen and ordinary atmospheric air near their triple points. These curves represent the equilibrium phase boundaries between the gaseous, liquid and solid states that are functions of temperature T and pressure P. The boundary between the gaseous and liquid states is a curve called the "vaporization curve"; the boundary between the gaseous and solid states is another curve called the sublimation curve"; and the boundary between the liquid and solid states is called the "fusion curve". The point where the substance can coexist in equilibrium in the gaseous, liquid and solid states is called the triple point. These curves are important because the physical state of any pure gas such as nitrogen or oxygen at any arbitrary temperature and pressure can be immediately determined by simply plotting the point (T,P) on its phase diagram and observing the "state region" that it lies in. (See, for example, Phase Equilibria, Academic Press, New York & London, 1970 by A, Reisman.) Notice that the phase diagram of atmospheric air lies inside the phase boundaries of nitrogen and oxygen. This is because air is a mixture of essentially 76% nitrogen and 24% oxygen by weight. Hence, the region bounded by these curves represents a "mixed phase" region of atmospheric air. Accurate phase properties of atmospheric air were determined experimentally by A.A. Vasserman and V.A. Rabinovich and reported in their book: Thermophysical Properties of Liquid Air And Its Components, U.S. Department of Commerce/The National Science Foundation, Technical Translation No. TT69-55092, 1970.

In the preferred embodiment of the invention, the initial pressure $P_1$ of the air immediately prior to entering the condensing expander is approximately equal to ambient atmospheric pressure (760 Torr or 10.13 N/cm$^2$). Assuming that the initial temperature $T_1$ = 300°K (which is slightly above standard atmospheric temperature) the corresponding Temperature-Pressure adiabatic expansion curve describing the temperature and pressure of the air passing through the expander is plotted in Fig. 1 and superimposed on the phase diagrams. Notice that this curve intersects the sublimation curve of $N_2$ at a fairly large angle and penetrates into the 100% solid phase region of atmospheric air. This intersection and penetration demonstrates that ordinary air at ambient temperature and pressure can indeed undergo a self-induced, spontaneous phase transformation by an adiabatic expansion process.

The condensation can be enhanced by precooling the air prior to expansion. This is demonstrated in Fig. 1 by the adiabatic expansion curve corresponding to an initial temperature $T_1$ = 250°K.

The sublimation curve of $N_2$ bounded by the expansion curves defines essentially an absolute boundary between the 100% solid phase of atmospheric air (which exists on the left hand side of this boundary) and partially solid, liquid and gaseous phases (which exist on the right hand side of this boundary). The vaporization curve of $O_2$, bounded by the expansion curves, defines another essentially absolute boundary. In this case, however, the boundary separates the 100% gaseous phase of atmospheric air (which exists on the right hand side of this boundary) from the partially liquefied, solidified and gaseous phases which exist on the left hand side of this boundary (but to the right of the $N_2$ sublimation curve). Thus, the diamond shaped region bounded by the vaporization curve of $O_2$, the sublimation curve of $N_2$ and the two expansion curves represents a transition region where the expanded air exists as a mixture of gaseous and solid phases in thermodynamic equilibrium with each other. This region will be called the "mixed phase region".

Let $T_1$ denote any initial temperature between 300°K and 200°K. This parameter value determines a unique adiabatic expansion curve of P versus T (as described above for the cases $T_1$ = 300°K and $T_1$ = 250°K) which intersects the boundaries of the mixed phase region at specific points. These intersection points correspond to unique values of the expansion ratio r. Fig. 2 gives the graphs of these threshold expansion ratios represented by $r = r_{mixed}(T_1)$ and $r = r_{solid}$ $(T_1)$ that correspond to intersections with the $O_2$ vaporization curve and with the $N_2$ sublimation curve, respectively. The region bounded by these curves represents the mixed phase region between $T_1$ = 300°K and $T_1$ = 200°K expressed in terms of expansion ratio r.

These graphs shown in Fig. 2 are important because they give detailed information about the phase transformation such as the minimum required expansion ratio needed to enter the mixed phase region starting from any initial temperature $T_1$ as well as the minimum required expansion ratio needed to pass out of this region and into the solid phase region. For example, if $T_1$ = 275°K, these threshold expansion ratios would be $r_{mixed}$ = 49.68 and $r_{solid}$ = 76.78, respectively, which can be read off the graphs directly by following the $T_1$ = 275°K ordinate line vertically upward to the $r = r_{mixed}$ and $r = r_{solid}$curves and reading the expansion ratios at these intersections respectively.

In order to obtain maximum phase transformation, the preferred embodiment of the condensing armospheric engine will always employ expansion ratios that send the air into the solid phase region. Thus, if $T_1$ = 300°K, the minimum required expansion ration would be 100.

The above examples, along with Fig. 2 clearly show the advantage of cooling the air before allowing it to enter the expansion chamber because for equal expansion ratios the air will be driven further into the solid phase region if it is pre-cooled. This will result in a more complete phase transformation (i.e., a greater phase transformation ratio).

In view of the very low cryogenic air temperatures generated inside the expansion chamber when these high expansion ratios are executed, the air is sent through a very large temperature gradient as it expands within the chamber. This temperature range is so high that it would be difficult to maintain an even approximate adiabatic expansion process if the walls of the chamber were kept at standard ambient atmospheric tempeature (i.e., 290°K). (These high wall temperatures would also tend to inhibit the phase transformation process.) Consequently, in the preferred embodiment of the invention, the expansion chamber is mounted inside a cryogenic Dewar vessel that is filled with very cold liquid air obtained as a byproduct from melting solid air particles that are produced from previous expansions. Thus, the walls of the expansion chamber are in direct contact with this cold liquid air and are therefore maintained at very low cryogenic temperatures. This low temperature environment of the expansion chamber not only makes an adiabatic process easier to achieve but it also enables the expansion process to become nearly isentropic as well. That is to say, the net increase in the entropy $\Delta S$ of the air as it expands through the gaseous phase is very small.

The above phase diagrams and graphs only demonstrate that it is possible to achieve some self-induced, spontaneous phase transformation in ordinary atmospheric air by isentropically expanding the air with very high expansion ratios on the order of 100. They do not however, and in fact, they can not, reveal quantitatively how much of the air undergoes phase transformation. This inforamtion can only be obtained from a detailed Temperature-Entropy diagram of atmospheric air.

Fig. 3 is a detailed Temperature-Entropy diagram of atmospheric air extended to very low cryogenic temperatures. Point A represents ambient atmospheric air at standard temperature (290°K) and pressure (10.13 N/cm$^2$). The corresponding entropy $S(T_1)$ = 6.861 Joules/gm°K. The vertical line downward from point A to point B represents the isentropic expansion of ambient air down to its saturated vapor curve at point B at about 48°K. The expansion ratio r can be obtained approximately by the equation

$$r = \left(\frac{T_2}{T_1}\right)^{\frac{1}{1-\gamma}} \qquad (1)$$

where $\gamma$ is equal to the gas constant which is 1.415 for cold air. Hence, by setting $T_1$ = 290°K, and $T_2$ = 48°K, it follows that r = 76.26. However, at point B, which lies on the saturated vapor curve of air, the actual amount of spontaneous phase transformation induced by the isentropic expansion is zero (i.e., the phase transformation ratio $R$ is zero). Spontaneous phase transformation can only be achieved when the vertical isentropic expansion line penetrates below the saturated vapor curve. When this happens, the air becomes supersaturated and the corresponding phase transformation ratio $R$ is given by the formula

$$R = \frac{S_v(T_2) - S(T_1)}{S_v(T_2) - S_s(T_2)} \qquad (2)$$

where $S_v(T_2)$ and $S_s(T_2)$ denote the corresponding entropy of air on the saturated vapor and the saturated solid curves of air respectively corresponding to the saturated air temperature $T_2$. For example, if $T_2$ = 30°K, then $S_v(T_2)$ = 9.591 Joules/gm°K and $S_s(T_2)$ = 0.595 Joules/gm°K. Hence, in this case $R(T_2)$ = (9.591 - 6.861)/(9.591 - .595) = .303. Thus about 30% of the expanded air will undergo spontaneous phase transformation into solid air crystals while the remaining 70% of the expanded air will be gaseous saturated vapor. The corresponding expansion ration r can be calculated from equation (1). The result is r = 236.68. The entropy of the 30% solidified air is 0.595 Joules/gm°K and the entropy of the 70% saturated air vapor is 9.591 Joules/gm°K. (It should be pointed out that since only differences in entropy values are important in thermodynamic calculations, the selection of the zero entropy point is not very important.)

The actual condensation is achieved by feeding the supersaturated air discharged from the condensing expander at point C (Fig. 3) through a solid phase condenser comprising a plurality of condensing surfaces (i.e., nucleation surfaces) at about the same temperature. The metastable air molecules of the supersaturated air vapor condense on these surfaces forming a layer of solid air crystals at very low entropy represented by point D on Fig. 3. That portion of the vapor that does not condense while passing through the condenser, emerges as saturated air vapor at point E on Fig. 3 with a much higher entropy. Thus referring to Fig. 3, the air expanding and condensing system is a system that takes ordinary ambient air in the atmosphere at point A with normal entropy and separates it into a portion of very low entropy solidified air at point D, and a portion of high entropy gaseous air at point E. Both of these portions have the same temperature but have different states (solid and gaseous). Since the process is nearly isentropic, the total entropy of the air after separation remains unchanged. The low entropy solidified air is kept thereby providing a low temperature heat reservoir, and the high entropy air is recompessed back to ambient atmospheric pressure and discharged into the open atmosphere.

If the noncondensed air vapor at point E were recompressed back to ambient atmospheric pressure by an isentropic process, the recompression would be represented on Fig. 3 by a vertical line from point E up to where it inersects the 1.0 Atm pressure curve. The resulting temperature would be well above ambient and the amount of mechanical work required to carry out the recompression would be much greater than the amount of mechanical work generated from the initial expansion (represented by the vertical line downward from point A to point C). This is due to the fact that the entropy of the saturated air vapor at point E is much higher than the entropy at point C. However, by utilizing the natural environment as an infinite heat sink, the recompression process can take place in several stages separated by heat exchangers that cool the air to about ambient temperature. This will significantly reduce the amount of mechanical work required to perform the recompression. However, by utilizing the much lower temperatures generated by the engine as coolant, the recompression work can be reduced to much lower levels such that essentially all of the work can be supplied from that produced by the initial expansion.

Fig. 4 is a system of curves showing the phase transformation ratio $R$ of air versus expansion ratio r corresponding to various initial air temperatures $T_1$. It is apparent from this figure that the phase transformation ratio $R$ can be substantially increased by isobarically pre-cooling the air to below ambient temperature before it is isentropically expanded inside the expansion chamber. Consequently, the design of the engine will incorporate this precooling feature as an intetgral part of its basic design.

It is apparent from Fig. 4 that the condensed air produced by the expansion will have a temperature between approximately 16°K and 30°K. Consequently, since the triple point of air is 61°K, the condensation is manifested by a direct solidification into the solid phase which completely avoids the liquid phase. This very cold solidified air presents a significant thermal potential difference with respect to the ambient environment that can be harnessed to generate additional mechanical work while the solid air is simultaneously liquefied. In particular, it can serve as a low temperature heat sink for a closed cycle intermediate stage condensing cryogenic engine operating between liquid air temperature at 80°K and the natural environment at 290°K. The condensing working fluid for this stage could be some other cryogen with a critical temperature significantly below ambient so that it can be superheated at 290°K.

Fig. 5 is a block diagram of the preferred embodiment of my condensing atmospheric engine. The corresponding Temperature-Entropy (TS) diagram, and Temperature-Pressure (TP) phase diagram of air corresponding to the block diagram of Fig. 5 are shown in Figs. 6 and 7 respectively. All of the various thermodynamic processes taking place by the air flowing through the engine shown on the block diagram of Fig. 5 are illustrated by various lines superimposed on the TS and TP diagrams of air given in Fig. 6 and 7 respectively. The points between these processes are denoted by capital letters and correspond to the flow points shown on Fig. 5.

Thus, in this embodiment, ordinary air 22 is drawn directly from the open atmosphere at point A at ambient temperature 290°K and pressure 10.1325 N/cm². This ambient intake air is isobarically pre-cooled by passing it through a low temperature heat exchanger 24. The air emerges from the heat exchanger 24 at point B and mixed with previously condensed air discharged from the last expander 72 also at atmospheric pressure but with a much lower temperature such that the equili brium temperature after mixing is about 200°K. This mixing step takes place inside a thermally insulated cold air reservoir mixing vessel 26. After the air is mixed inside the mixing vessel at point B, it is fed into a thermally insulated, low pressure expander 28 where it is isentropically expanded with an expansion ratio on the order of 300 into a thermally insulated cryogenic vacuum chamber 30. The expander 28 extracts almost all of the natural gaseous thermal energy of the cold air at atmospheric pressure and converts a large portion of it directly into mechanical work $W_{e_1}$, while simultaneously reducing the air to a very cold supersaturated vapor at about 19°K. The expansion takes place very rapidly and(in view of Fig. 4) leaves about 50% of the vapor in a gaseous "metastable" state inside the vacuum chamber at point C. This metastable air spontaneously condenses into solid air crystals along the inside surfaces of condensing tubes 32 mounted inside the vacuum chamber 30. This condensation occures spontaneously without removing any latent heat because of the very low molecular velocities of the expanded supersaturated air vapor. Almost all of the intial pre-expanded kinetic energy of these molecules is transferred to the movable member of the expander during the expansion process and converted directly into mechanical work. The remaining 50% of the air becomes saturated air vapor at point E. Referring to the TS diagram of Fig. 6, the phase transformation ratio $R$ is equal to the length of the line segment $\overline{CE}$ divided by the length of the line segment $\overline{DE}$ and is approximately 0.50. Although the total entropy of the condensed solid and the uncondensed gaseous air vapor taken together remains unchanged from its preexpanded entropy at point B (because of the isentropic nature of the expansion process) the entropy of the condensed air at point D is much lower than the entropy of the noncondensed saturated air vapor at point E. It is important to emphasize that this condensation was achieved without having to absorb any latent heat by a low temperature heat sink. This is the most important and key operating feature of my invention.

The gaseous uncondensed air at point E is withdrawn from the vacuum chamber 30 and fed into a first stage recompressor 34 where it is recompressed to some intermediate pressure below ambient atmospheric pressure. The amount of mechanical work consumed by this first stage recompression step is denoted by $W_{c_{11}}$. The partially recompressed air emerges from this recompressor 34 at point F. The resulting temperature of the recompressed air is about equal to ambient atmospheric temperature. This nearly ambient high temperature is due to the fact that the entropy of this noncondensed air is greater than that of the pre-expanded air. The partially compressed air is then fed into another heat exchanger 36 which lowers its temperature to below 200°K. When it emerges from the heat exchanger 36 at point G, it is fed into a second compressor 38 where it is compressed to ambient atmospheric pressure and discharged back into the open atmosphere at point H. The amount of work consumed by the second stage compressor is denoted by $W_{c_{12}}$.

As described above, if the noncondensed gaseous air vapor were recompressed back to ambient atmospheric pressure by a single isentropic recompressor, the resulting air temperature would be well above ambient and the amount of machanical work consumed would be fairly high. By breaking the recompession into two steps, separated by a cooling step, the total amount of mechanical work expended by the recompression back to ambient atmospheric pressure is significantly reduced.

The solidified air is withdrawn from the condenser 32 at point D and is fed into a solid phase compressor 42 and isentropically compressed to ambient atmospheric pressure (1.0 Atm). (The detailed design of this solid phase compressor 42, as well as the solid phase condenser 32 and first stage expander 28 will be disclosed later.) The amount of mechanical work consumed by this solid phase compressor 42 is denoted by $W_{c_{13}}$. Since the specific volume of the solidified air is several hundred fold less than that of the gaseous air, $W_{c_{13}} \approx 0$.

For simplicity, it will be assumed that the total amount of mechanical work required to recompress the noncondensed air back to ambient atmospheric pressure is exactly equal to the mechanical work generated from the initial expansion. Hence, the net output work of the first stage $W_{net_1} = W_{e_1} - (W_{c_{11}} + W_{c_{12}} + W_{c_{13}}) = 0$. However, it should be noted that since there is about twice as much air expanded than needs to be recompressed, this simplification is probably too conservative and the first stage engine can probably be designed to produce a significant amount of positive output work.

The solidified air which emerges from the solid phase compressor 42 at point I at a temperature of about 19°K represents a significant "reverse" thermal energy reservoir with respect to the natural environment at ambient temperature that can be utilized to generate a substantial amount of mechanical work. As described above, the harnessing of this thermal energy potential difference between 19°K and 290°K (ambient) will be accomplished in two stages --an intermediate second stage and a third stage. The intermediate or second stage will harness the thermal potential difference of the condensed cryogenic air from its solid phase at 19°K up to its liquid phase at about 80°K. The third stage will harness the thermal potential difference of the cryogenic air from its liquefied phase at 80°K, all the way up to ambient temperatures.

Referring back to the block diagram of Fig. 5, the partially compressed solidifed air at point I (compressed to 1.0 Atm) is fed into a heat exchanger 44 where it is isobarically heated to 80°K by absorbing the latent heat $Q_{out_2}$ that is rejected by a closed cycle intermediate second stage cryogenic engine that is utilizing this heat exchanger 44 as its condenser. The high temperature heat reservoir of this intermediate second stage cryogenic engine is the natural thermal energy of the ambient environment at 290°K.

The total amount of heat $\hat{Q}_{in_2}$ that can be absorbed by one gram of condensed air between 19°K and 80°K is given by $C_s(T_t - 19°) + h_f + C_l(80° - T_t) = \hat{Q}_{in_2}$ where $T_t$ = 61°K denotes the triple point of air, and where $C_s$ and $C_l$ denote the specific heats of solid and liquid air at 1.0 Atm near the triple point respectively and where $h_f$ denotes the latent heat of fusion of air. These values are: $C_s$ = 1.582 Joules/gm°K, $C_l$ = 1.896 Joules/gm°K, $h_f$ = 22.721 Joules/gm. Consequently, $\hat{Q}_{in_2}$ = 1.582 (61 - 19) + 22.721 + 1.896 (80 - 61) = 125.189 Joules/(gm Air). Thus, the solidified air enters the heat exchanger 44, extracts the latent heat from the saturated second stage cryogen thereby liquefying the second stage cryogen while the air is simultaneously isobarically heated above its melting temperature $T_t$ whereupon the solid air crystals melt into liquid air which is further heated to 80°K. This liquid air is then withdrawn from the heat exchanger 44 at point J.

The closed cycle second stage cryogenic engine operates between the natural ambient environment, which it utilizes as its high temperature heat reservoir, and the condenser 44 where the solidified cryogenic air entering this condenser is utilized as its low temperature heat sink. The condensing working fluid selected for this intermediate, closed cycle second stage, engine is oxygen. Referring to Fig. 5, liquefied oxygen is withdrawn from it condenser 44 at point $A_2$ at 80°K in a saturated liquid state. The four thermo dynamic state parameters; temperature T, pressure P, specific enthalpy H, and entropy S, at this saturated liquid point $A_1$ are: $T_{21}$ = 80.000°K, $P_{21}$ = 0.297 Atm, $H_{21}$ = -150.700 Joules/gm and $S_{21}$ = 2.741 Joules/gm°K. (The detailed thermodynamic analysis of this intermediate second stage is based on very accurate thermodynamic property data of oxygen published by L.A. Weber in his book: Thermodynamic and Related Properties of Oxygen from the Triple Point to 300°K at Pressures to 1000 Bar, NASA Reference Publication 1011, NBSIR 77-865 December 1977.)

The liquefied oxygen at point $A_2$ is fed into a cryogenic hydraulic compressor 46 where it is isentropically compressed to 300 Bar (296.077 Atm). The compressed liquefied oxygen emerges from this compressor 46 at point $B_2$ with its thermodynamic state parameters equal to: $T_{22}$ = 84.421°K, $P_{22}$ = 296.077 Atm, $H_{22}$=-125.783 Joules/gm, $S_{22}$ = 2.741 Joules/gm°K. The mechanical work $\hat{W}_{c2}$ consumed by the compressor 46 is given by $\hat{W}_{c2}$ = $H_{22}$ -$H_{21}$ = 24.917 Joules/gm. The compressed liquid oxygen leaves the compressor 46 at point $B_2$ and is immediately fed into the first ambient vaporizer 48 which is maintained in thermal contact with the natural environment where it is isobarically heated. This vaporizer 48 may be immersed in a large body of ambient water, or it may be embedded under ground and in thermal contact with ambient earth, or positioned above the ground and receiving natural thermal energy from ambient air that is circulated over it.

Since the temperature of the compressed liquefied oxygen entering the vaporizer 48 (which is 84.421°K) is significantly below that of the natural environment, the thermal gradient across the vaporizer 48 is very large and thus the cryogenic oxygen extracts the natural thermal energy from the environment at a rapid rate. Therefore, the compressed oxygen is rapidly heated above its critical temperature (154.8°K) and vaporizes to become a pressurized gas which is superheated to ambient (290°K). This pressurized, superheated oxygen leaves the ambient vaporizer 48 at point $C_2$ with its thermodynamic state parameters equal to: $T_{23}$ = 290.000°K, $P_{23}$ = 296.077 Atm, $H_{23}$ = 203.990 Joules/gm, $S_{23}$ = 4.733 Joules/gm°K. The amount of heat energy $\hat{Q}_{in_{21}}$ that is extracted and absorbed from the natural environment during this first isobaric heating step is given by $\hat{Q}_{in_{21}}$ = $H_{23}$ = $H_{22}$ = 329.773 Joules/gm.

Upon leaving the first ambient heat exchanger (i.e., vaporizer) 48 at point $C_2$ (Fig. 5) the superheated pressurized oxygen is fed into the first isentropic expander 50 where a large portion of the natural thermal energy $\hat{Q}_{in_{21}}$ extracted from the environment inside the vaporizer 48 is converted into mechanical work $\hat{W}_{e_{21}}$. As indicated in Fig. 5, a portion of this output work is used to drive the compressor 46 which consumes $\hat{W}_{c_2}$. The outlet pressure $P_{24}$ of this expander 50 is designed to be 88.823 Atm. This outlet pressure is designed to produce approximately equal pressure ratios for the first two expanders. (The outlet pressure for the third expander is designed to reduce the oxygen to the saturated vapor state prior to liquefaction inside the condenser 44.)

The oxygen leaves the first expander 50 at point $D_2$ with its thermodynamic state parameters equal to: $T_{24}$ = 207.125°K, $P_{24}$ = 88.823 Atm, $H_{24}$ = 138.310 Joules/gm, $S_{24}$ = 4.733 Joules/gm°K. (The pressure ratio of the first expander 50 is $P_{23}/P_{24}$ = 3.333.) Consequently, the amount of mechanical work generated by the first expander is equal to $\hat{W}_{e_{21}}$ = $H_{23}$ -$H_{24}$ = 65.680 Joules/gm. This is almost three times greater than the amount of mechanical work consumed by the compressor 46.

Since the expanded oxygen leaving the first expander 50 at point $D_2$ has a temperature of 207.125°K which is significantly below ambient it is fed into a second ambient heat exchanger 52 that is also maintained in thermal contact with the environement. The compressed oxygen at 88.823 Atm is circulated through this second heat exchanger 52 where it extracts and absorbs a considerable amount of additional thermal energy from the natural environment. Thus, the oxygen is isobarically reheated back to ambient and emerges from this second ambient heat exchanger 52 at point $E_2$ on Fig. 5. The thermodynamic state parameters of the compressed superheated oxygen at $E_2$ are: $T_{25}$ = 290.000°K, $P_{25}$ = 88.823 Atm, $H_{25}$ = 240.850 Joules/gm, $S_{25}$ = 5.154 Joules gm°K. The amount of additional thermal energy $\hat{Q}_{in_{22}}$ that is extracted and absorbed from the natural environment during the second isobaric heating step is given by $\hat{Q}_{in_{22}}$ = $H_{25}$ -$H_{24}$ = 102.540 Joules/gm.

After leaving the second ambient heat exchanger 52 at point $E_2$ (Fig. 5) the superheated pressurized oxygen is fed into the second isentropic expander 54 where a large portion of the natural thermal energy $\hat{Q}_{in_{22}}$ extracted from the environment during the second heating step is converted into additional mechanical work $\hat{W}_{e_{22}}$. Since there are only three expansion steps in this intermediate closed cycle stage, the outlet pressur $P_{26}$ of this second expander 54 at point $F_2$ must be equal to 25.969 Atm in order to obtain the required initial pressure at the final expansion (so as to reduce the oxygen to a saturated vapor at 80°K prior to liquefaction). Consequently, the thermodynamic state parameters at point $F_2$ after the second isentropic expansion step are: $T_{26}$ = 200.871°K, $P_{26}$ = 25.969 Atm, $H_{26}$ = 168.591 Joules/gm, $S_{26}$ = 5.154 Joules/gm°K. (The pressure ratio of the second expander 54 is $P_{25}/P_{26}$ = 3.420.) Consequently, the amount of mechanical work generated by the second expander 54 is $\hat{W}_{e_{22}} = H_{25} - H_{26}$ = 72.259 Joules/gm. Since all of the mechanical work $\hat{W}_{c_2}$ consumed by the compressor 46 is supplied entirely by the output work $\hat{W}_{e_{21}}$ of the first expander 50, all of the output work $\hat{W}_{e_{22}}$ generated by the second expander 54 contributes towards the net output work of this intermediate stage.

Since the expanded gas temperature after this second expansion step is again significantly below ambient, it is fed into a third ambient heat exchanger 56, that is also maintained in thermal contact with the natural environment. Thus, after emerging from the second expander 54 at point $F_2$, the cold, compressed oxygen is fed into the third ambient heat exchanger 56 at a temperature $T_{26}$ = 200.871°K and pressure $P_{26}$ = 25.969 Atm and is circulated through it where it is isobarically reheated back to ambient a third time by extracting and absorbing a significant amount of additional natural thermal energy from the environment. The pressurized reheated oxygen gas leaves the third heat exchanger 56 at point $G_2$ (Fig. 5). The corresponding thermodynamic state parameters of the oxygen at point $G_2$ are: $T_{27}$ = 290.000°K, $P_{27}$ = 25.969 Atm, $H_{27}$ = 256.967 Joules/gm, $S_{27}$ = 5.519 Joules/gm°K. Consequently, the amount of additional thermal energy $\hat{Q}_{in_{23}}$ that is extracted and absorbed from the natural environment during the third isobaric heating step is given by $\hat{Q}_{in_{23}} = H_{27} - H_{26}$ = 88.376 Joules/gm.

After leaving the third ambient heat exchanger 56 at point $G_2$ (Fig. 5) the superheated pressurized oxygen is fed into the third isentropic expander 58 where a large portion of the natural thermal energy $\hat{Q}_{in_{23}}$ extracted and absorbed from the ambient environment during the third heating step is converted into additional mechanical work $\hat{W}_{e_{23}}$. Since this last expander 58 is designed to transform the oxygen into a saturated vapor at 80°K, the thermodynamic state parameters of the oxygen after leaving the expander 58 at point $H_2$ are: $T_{28}$ = 80,000°K, $P_{28}$ = 0.297 Atm, $H_{28}$ = 71.700 Joules/gm, $S_{28}$ = 5.519 Joules/gm°K. Thus, the pressure ratio of this expander is $P_{27}/P_{28}$ = 87.438. The mechanical work generated by this third expander is $\hat{W}_{e_{23}} = H_{27} - H_{28}$ = 185.267 Joules/gm. Upon leaving this expander 58, the saturated oxygen vapor is recycled back into the condenser 44 where its latent heat of condensation is extracted and absorbed by the incoming solidified air at 19°K. Thus, the saturated oxygen vapor is isothermally liquefied while the solidified air is simultaneously melted and heated to liquid air at 80°K and the cycle is repeated.

The total mechanical output work $\hat{W}_{e_2}$ that is generated by the three expanders 50, 54 and 58 is given by $\hat{W}_{e_2} = \hat{W}_{e_{21}} + \hat{W}_{e_{22}} + \hat{W}_{e_{23}}$ = 323.206 Joules/gm. Thus, the net mechanical output work $\hat{W}_{net_2} = \hat{W}_{e_2} - \hat{W}_{c_2}$ = 298.289 Joules/gm.

The total heat energy $\hat{Q}_{in_2}$ that is extracted from the natural environment by this intermediate stage is given by $\hat{Q}_{in_2} = \hat{Q}_{in_{21}} + \hat{Q}_{in_{22}} + \hat{Q}_{in_{23}}$ = 520.689 Joules/gm. The resulting net thermal efficiency of this stage is therefore $\hat{W}_{net_2} / \hat{Q}_{in_2}$ = .573 (57.3%). The corresponding Carnot efficiency $\eta$ = (290-80)/290 = .724 (72.4%). The amount of latent heat rejected in the condenser 44 is given by $\hat{Q}_{out_2} = H_{28} - H_{21}$ = 222.400 Joules/gm.

In order for this intermediate stage, closed cycle condensing cryogenic engine to operate properly, all of its latent heat of condensation rejected in the condenser 44 at 80°K must be completely absorbed by the incoming solidified air at an initial temperature of 19°K which is heated and leaves the condenser as liquid air at 80°K. In order for this balance to occur, the relative mass flow rate between the working fluid of the intermediate stage (oxygen) and the air passing through the condenser 44 must be carefully controlled. Since the amount of latent heat rejected by one gram of oxygen passing through the condenser is $\hat{Q}_{out_2}$ = 222.400 Joules and the amount of heat that can be absorbed by one gram of air entering the condenser in the solid state at 19°K and leavin in the liquid state at 80°K is $\hat{Q}_{in_2}$ = 125.189 Joules, the required mass flow ratio $m_{21}$ between the oxygen and the air is given by

$$m_{21} = \text{oxygen/air} = \frac{\hat{Q}_{in_2}}{\hat{Q}_{out_2}} = .563$$

Consequently, for every gram of air that passes through the condenser 44, only 0.563 gm of oxygen can be passed through in order for the oxygen to be completely condensed into liquid. Thus, the net output work that can be generated from one gram of air passing though the condenser 44 is given by $m_{21} \hat{W}_{net_2}$. Since the proportional amount of air actually solidified by the main expander 28 is equal to the condensation ratio *R*, the amount of condensed air leaving the condenser 32 at point D corresponding to one gram of new air taken into the engine from the atmosphere at point A (Fig. 5) is equal to *R* / (1-*R*) = 1.024 gm. Consequently, the net mechanical output work $W_{net_2}$ generated by the closed cycle intermediate stage corresponding to one gram of new air taken from the atmosphere at point A is given by $W_{net_2}$ = $m_{21}$ $\hat{W}_{net_2}$ [*R*/(1-*R*)] = .563 x 298.289 x 1.024 = 172.016 Joules/(gm air).

Before proceeding, I would like to point out that instead of utilizing the liquefied air emerging from the heat exchanger 44 at point J (Fig. 5) with a temperature of 80°K and a pressure of 1.0 Atm to generate more mechanical work, it could be withdrawn from the engine at this point to be used for other purposes. In this engine design, the first two stages can be viewed as an air liquefaction machine for manufacturing liquid air. The liquid air could then be used to manufacture liquid oxygen, nitrogen, krypton, neon, xenon, etc., by well known methods of air separation. However, instead of expending mechanical work to obtain the liquid air as in all prior art air liquefying machines, this machine obtains liquid air by generating mechanical work. The option of operating the cryogenic engine as an air liquefaction machine for simultaneously manufacturing liquid air and generating mechanical output work is indicated in Fig. 5 by the dashed arrow at point J.

Since the main object of the present invention is the generation of mechanical work, the liquid air at point J (Fig. 5) will be used in the preferred embodiment to generate more mechanical work. Thus, the remaining operating features of my multiple-stage condensing atmospheric engine are designed to harness the remaining thermal potential difference existing between the 80°K liquid air at point J and the 290°K ambient environment by converting it into a substantial amount of additional mechanical work.

Thus, referring to Fig. 5, after the liquefied air is discharged from the intermediate stage condenser 44 at point J it is fed into a compressor 60 where it is isentropically compressed to 300 Atm. This compression step consumes an amount of work $\hat{W}_{c_3}$ given by

$$\hat{W}_{c_3} = \frac{(300-1) \times 10.1325 N/cm^2}{1.148 \ gm/cm^3} = 26.390 \text{ Joules/gm}$$

where the density of the air is given by 1.148 gm/cm$^3$. The solid phase com pressor 42 only consumes $W_{c_{13}}$ = 0.100 Joules/gm in compressing the solidified air from 0.237 torr (.0003 Atm) to 760 torr (1.0 Atm).

The compressed liquefied air emerges from the compressor 60 at point K and is injected into another high pressure ambient heat exchanger 62 (that is in thermal contact with the ambient environment) where it is isobarically heated. This heat exchanger 62 may be immersed in a body of water, or embedded under ground that is in thermal contact with the ambient earth, or maintained above the ground and receiving natural thermal energy from the ambient air that is circulated over it. Since the temperature of the compressed liquefied air entering the heat exchanger 62 is significantly below that of the natural environment, the thermal gradient across the heat exchanger is very large. Hence, the cryogenic air extracts the natural thermal energy from the environment at a rapid rate. The temperature of the comressed liquefied air rapidly rises above its critical temperature (132.5°K) and the air is vaporized into compressed gaseous air that is superheated to ambient. The compressed gaseous air leaves the heat exchanger 62 at point L. The total amount of heat absorbed during this isobaric heating step is $Q_{in_{31}}$ = H(L) - H(K) = 344.974 Joules/gm which is obtained by taking the difference between the specific enthalpies at points L and K on the TS diagram of air given in "Temperature-Entropy Diagram for air between 80°K and 450°K," published by the British Oxygen Co., Ltd., 1954.

The isentropic compression step inside the compressor 60 is represented by the vertical line segment $\overline{JK}$ on the TS diagram of air given in Fig. 6 and by the nearly vertical line segment $\overline{JK}$ on the PT phase diagram of air given in Fig. 7. The isobaric heating step inside the ambient heat exchanger 62 is represented by the isobaric curve $\widehat{KL}$ on the TS diagram of air (Fig. 6 and by the horizontal line segment $\overline{KL}$ on the PT phase diagram of air (Fig. 7).

The high pressure superheated air at point L is then fed into an isentropic expander 64 where a large portion of the thermal energy extracted from the environment inside the heat exchanger 62 is converted into additional mechanger work $\hat{W}_{e_{31}}$. The outlet pressure of this expander at point M is de signed to be 45 Atm. Consequently, using the TS diagram of air given by BOC, the mechanical work $\hat{W}_{e_{31}}$ can be calculated by taking the difference between the specific enthalpies at points L and M at constant entropy. The result is $\hat{W}_{e_{31}}$ = H(L) - H(M) = 111.002 Joules/gm. This isentropic expansion step is represented by the vertical line segment $\overline{LM}$ on the TS diagram of the air (Fig. 6) and by the adiabatic expansion curve $\widehat{LM}$ on the PT diagram of air (Fig. 7).

The expander 64 not only generates mechanical work but simultaneously reduces the temperature of the air significantly below ambient thereby creating another thermal potential difference between the ambient environment which is utilized to extract more natural thermal energy for conversion into more mechanical work. The outlet temperature of the expanded air at point M is 168°K. (This temperature is also obtained from the TS diagram of air given by BOC.) Since this temperature is significantly below ambient, the pressurized air at point M (at temperature 168°K, and pressure 45 Atm) is fed into another ambient heat exchanger 66 where it is isobarically reheated back to ambient by extracting additional natural thermal energy from the environment. After this second reheating step, the air emerges from the ambient heat exchanger 66 at point N (Fig. 5) with a temperature of 290°K and a pressure of 45 Atm. This second isobaric reheating step is represented by the isobaric curve $\widehat{MN}$ on the TS diagram of air (Fig. 6) and by the horizontal line segment $\overline{MN}$ on the PT phase diagram of air (Fig.7). The total amount of heat $\hat{Q}_{in_{32}}$ extracted from the environment during this reheating step is $\hat{Q}_{in_{32}} = H(N) - H(M) =$ 147.779 Joules/gm which is obtained from the TS diagram of air given by BOC.

The prssurized air at N is then fed into another isentropic expander 68 where a large portion of the natural thermal energy extracted from the ambient environment in the previous heating step is converted into still more mechanical work $\hat{W}_{e_{32}}$. The outlet pressure of this expander 68 at point O is designed to be 7 Atm. The mechanical work $\hat{W}_{e_{32}}$ is calculated by taking the difference be tween the specific enthalpies at points N and O at constant entropy on the TS diagram of air (BOC). The result is $\hat{W}_{e_{32}} = H(N) - H(O) =$ 118.664 Joules/gm. The expansion process simultaneously reduces the temperature of the air which appears at the outlet point O at 167.5°K which is also obtained from the TS diagram of air (BOC).

Since the outlet temperature of the compressed air (at 7.0 Atm) at point O is again significantly below ambient, it is fed into another ambient heat exchanger 70 to extract more natural thermal energy from the ambient environment for conversion into additional mechanical work. By circulating through this third ambient heat exchanger 70, the compressed air is isobarically reheated back to ambient and emerges from this heat exchanger 70 at point P (Fig. 5) at a temperature of 290°K and a pressure of 7.0 Atm. This isobaric reheating step is represented by the isobaric curve $\widehat{OP}$ on the TS diagram of air (Fig. 6) and by the horizontal line segment $\overline{OP}$ on the PT phase diagram of air (Fig. 7). The total amount of natural heat energy extracted from the ambient environment inside the ambient heat exchanger 70 is obtained by taking the difference between the specific enthalpies at points P and O. The result is $\hat{Q}_{in_{33}} = H(P) - H(O) =$ 126.528 Joules/gm which is obtained from the TS diagram of air given by BOC.

The heated, compressed air at point P, is then fed into the last isentropic expander 72 where a large portion of the natural thermal energy extracted from the ambient environment inside the third ambient heat exchanger 70 is converted into additional mechanical work $\hat{W}_{e_{33}}$. The outlet pressure of this expander at point Q is designed to be 1.0 Atm (i.e., ambient atmospheric pressure). The value of $\hat{W}_{e_{33}}$ is obtained by taking the difference between the specific enthalpies at points P and Q at constant entropy. The result is $\hat{W}_{e_{33}} = H(P) - H(Q) =$ 124.284 Joules/gm which is obtained from the TS diagram of air given by BOC. This final isentropic expansion step is represented by the vertical line segment $\overline{PQ}$ on the TS diagram of air (Fig. 6) and by the adiabatic expansion curve $\widehat{PQ}$ on the PT phase diagram of air (Fig. 7).

The total mechanical work $\hat{W}_{e_3}$ that is generated by the third stage is equal to the combined output work generated by the three isentropic expanders 64, 68, and 72. This work is

$$\hat{W}_{e_3} = \hat{W}_{e_{31}} + \hat{W}_{e_{32}} + \hat{W}_{e_{33}} = 353.950 \text{ Joules/gm}$$

Hence, the net output work of this third stage is

$$\hat{W}_{net_3} = \hat{W}_{e_3} - \hat{W}_{c_3} = 327.460 \text{ Joules/gm}$$

The total input heat $\hat{Q}_{in_3}$ that is extracted from the natural environment by one gram of air passing through the three ambient heat exchanges 62, 66, and 70 which is converted into the above output work $\hat{W}_{e_3}$ by the three expanders 64, 68 and 72 is given by

$$\hat{Q}_{in_3} = \hat{Q}_{in_{31}} + \hat{Q}_{in_{32}} + \hat{Q}_{in_{33}} = 619.281 \text{ Joules/gm}$$

Consequently, the net thermal efficiency of this third stage is

$$\hat{W}_{net_3} / \hat{Q}_{in_3} = .529 \ (52.9\%)$$

The exhaust air leaving the last expander 72 at point Q (at ambient pressure 1.0 Atm) is at a temperature of 165°K. Consequently, instead of discharging this cold air back into the atmosphere it is mixed with the pre-cooled intake air at point B (Fig. 5) inside the cold air reservoir vessel 26 and recycled back into the expander 28 of the first stage. Thus, about 50% of the inlet air at atmospheric pressure $P_1$ entering the first expander 28 of the atmospheric engine at point B is very cold air that has been previously condensed and cycled through the third stage. The other 50% is drawn from the open atmosphere at point A, circulated through the pre-cooler 24, and mixed with the recycled air at point B. The equilibrium temperature $T_1$ of the resulting mixture at point B (at standard atmospheric pressure $P_1$) prior to expansion inside the initial expander 28 will be about 200°K (or colder). After this mixed air is expanded through the expander 28, and fed through the cryogenic condensing tubes 32, a fraction *R* solidifies into solid air crystals and fed into the heat exchanger 44 (i.e., the second stage condenser) where it is melted into liquid air, compressed, and fed through the third stage as described above. The fractional part that does not condense is 1 - *R* and is recompressed back to ambient atmospheric pressure $P_1$ and exhausted back into the open atmosphere at point H.

Pre-cooling the ambient air taken from the atmosphere at point A (Fig. 5) will be relatively easy because the low temperatures generated by the atmospheric engine can be readily utilized as a low temperature heat sink. For example, the discharge temperature of the gas coming out of expanders 50 and 54 at points $D_2$ and $F_2$ (Fig. 5) in the second stage is about 200°K. This very low gas temperature can be utilized as a very effective low temperature coolant for the incoming ambient air. Thus, instead of feeding this low temperature gas directly into the ambient heat exchangers 52 and 56, it could be temporarily diverted and fed into the intermediate heat exchanger 24 and utilized for cooling the incoming air via thermal conduction. After circulating through this heat exchanger 24 (which would be in a parallel configuration to increase the thermal absorption from the circulating incoming ambient air) it could then be returned to points M and O and fed into their respective ambient heat exchangers 52 and 56. Since the gas has to be heated back to ambient in any case, it may as well serve as a heat sink for the incoming air before it is heated all the way back to ambient. Since the effective mass flow rate of this cooling gas circulating through the ambient air pre-cooler 24 would be twice that flowing through the second stage, and since the amount of ambient air flowing into the pre-cooler 24 is 1 - *R* times the total amount entering the expander 28, the ambient air could be cooled to fairly low temperatures before it is mixed with the recycled air that is discharged from the expander 72 at 165°K. Consequently, after mixing the pre-cooled air with the 165°K re cycled air and taking into consideration the relative mass flows, the resulting temperature after mixing would be about 200°K. However, these calculations do not take into consideration the regenerative cooling effect of continuously recycling the very cold air coming out of the third stage (which will result in steadily increasing condensation ratios). Thus, it would be relatively easy to obtain pre-expansion temperatures below 200°K which would generate condensation ratios above .5. This would result in a substantial increase in net output because the mass flow rates $\dot{m}_2$ and $\dot{m}_3$ would be significantly increased.

Similarly, after the gas passing through the third stage has been expanded through expanders 64 and 68 (Fig. 5) the resulting outlet gas temperatures at points M and O are approximately 168°K. Therefore, instead of feeding this low temperature gas directly into the ambient heat exchanges 66 and 70 as previously descirbed, it could be temporarily diverted and fed into another intermediate heat exchanger 36 and utilized for cooling the partially compressed, noncondensed air coming from the recompressor 34 (Fig. 5). After circulating through this heat exchanger 36 (which would also be in a parallel configuration to increase the thermal absorption from the circulating outgoing partially compressed air) it could then be fed into their respective ambient heat exchangers 66 and 70. Since this air also has to be heated back to ambient, it may as well serve as a heat sink for the outgoing noncondensed air before it is heated all the way back to ambient. As in the previous case, since the effective mass flow rate of this cooling gas circulating through the air cooler 36 would be twice that flowing through the third stage, the outgoing noncondensed air could probably be cooled to about 210°K or lower before it is fed into the second recompressor 38 and recompressed all the way to ambient atmospheric pressure and discharged back into the atmosphere. This would significantly reduce the mechanical work $W_{c_{12}}$ that is expended by the second recompressor 38 in the first stage of the atmospheric engine. This would significantly reduce the amount of mechinal work required to recompress the noncondensed air back to ambient atmospheric pressure in the first stage.

This same design technique can also be applied to provide a very cold cryogenic environment for the first stage expander 28 and vacuum chamber 30. Thus, instead of feeding the cryogenic liquefied air emerging from the condenser 44 at point J at 80°K and 1.0 Atm pressure into the high pressure hydraulic compressor 60, it can be temporarily diverted and fed into and circulated through a liquid air Dewar jacket that completely surrounds the external walls of the expander 28 and vacuum chamber 30. In some embodiments, this liquefied air may be in direct thermal contact with the external walls of the expansion chamber. This provides the expansion chamber with a cryogenic environment for enhancing the phase transformation process. It will also minimize any increase in entropy during the expansion process.

After this liquid air is circulated through this Dewar jacket it is returned to point J and fed into the compressor 60. Although it will be at a slightly higher temperature, it will still be essentially 100% liquid so that the work expended by the compressor $\hat{W}_{c_3}$ is only slightly more than it would be if there were no diversion and the liquid air was 80°K.

If desired, a lower liquid air temperature can be obtained for circulating through this Dewar jacket by diverting the condensed air passing through the condenser 44 immediately after the solidified air is melted to liquid air at the triple point, which is 61°K. After this 61°K liquid air is circulated through the Dewar jacket, it is returned back to the condenser 44 at a slightly higher temperature. This diversion could be compensated by raising the liquefaction temperature of the second stage by changing the saturated vapor pressure.

This same technique can also be applied to utilize the liquid oxygen in the second stage that is emerging from the condenser 44 at point $A_2$ at 80°K. Thus, instead of immediately feeding this liquefied oxygen into the compressor 46 as soon as it emerges from the condenser 44, it can be temporarily diverted and fed into a cryogenic liquefied gas Dewar jacket described above. After circulating through this Dewar at about 80°K, the liquefied gas is returned to point $A_2$ and fed into the compressor 46. Since the liquefied oxygen is still essentially 100% liquid when it enters the compessor 46, the amount of mechanical work expended by it remains about the same. (The liquefied oxygen could be partially compressed before entering the Dewar to insure that it remains a liquid.

The compressed liquefied cryogenic fluids at points $B_2$ and K are temporarily diverted from entering their respective ambient heat exchangers 48,62 and circulated as cryogenic coolants at about 90°K through the heat exchanger 36 to further cool the partially compressed noncondensed air to significantly lower temperatures before it is compressed all the way back to ambient pressure by the second recompressor 38. Since there would be about 1.6 gm of this cryogenic coolant circulating through the compound heat exchnger 36 for every gram of air to be recompressed, the effect of this additional cooling step would be a significant reduction in the amount of mechanical work required to recompress the noncondensed air back to ambient atmospheric pressure in the first stage.

All of the above described cold gas and liquefied gas diversions were omitted from Fig. 5 in order to simplify the discussion concerning the main operating principles of the engine. However, these are important features and operating principles of the invention which should be kept in mind throughout the remainder of this specification.

Since, for every gram of new air taken into the engine from the atmosphere at point A, there is *R*/ (1 - *R*) grams of air that condenses, the net amount of mechanical output work $W_{net_3}$ generated by the third stage corresponding to one gram of new intake air is given by $W_{net_3} = \hat{W}_{net_3}\ R/(1 - R) = 335.414$ Joules/(gm air). The total net output work $\hat{W}_{net}$ of the atmospheric engine that is generated by ingesting one gram of new air from the ambient atmosphere is given by combining the output of all three stages. Thus,

$$\hat{W}_{net} = \hat{W}_{net_1} + W_{net_2} + W_{net_3} = 507.430 \text{ Joules/(gm air)}$$

(This performance figure is based on the assumption that $\hat{W}_{net_1} = 0$ and is therefore probably very conservative.) Thus, the total net power output of the engine is given by

$$P_{net} = \dot{m}_2\,\hat{W}_{net_2} + \dot{m}_3\,\hat{W}_{net_3}$$

where $\dot{m}_2$ and $\dot{m}_3$ are the mass flow rates of the working fluids for the second and third stage engines. These flow rates are related to the mass flow rate $\dot{m}_1$ of new air ingested into the first stage by

$$\dot{m}_2 = m_{21} \dot{m}_1 [R/(1 - R)]$$

$$\dot{m}_3 = \dot{m}_1 [R/(1 - R)]$$

where $R$ = 0.506 and $m_{21}$ = .563. Hence, $\dot{m}_2$ = .577 $\dot{m}_1$, $\dot{m}_3$ = 1.024 $\dot{m}_1$ and the total net power output of the condensing atmospheric engine can be expressed as

$P_{net}$ = .5074 $\dot{m}_1$ KW/(gm/sec) (3)

Thus, a condensing atmospheric engine, with the embodiment described above, ingesting ordinary air at a rate of only 60 gm/sec (2.12 ounces/sec) will generate a power of 30.45 KW or 40.86 HP. This power is siffucient for propelling a standard size automobile. Since ordinary air is free, universally avilable and inexhaustible, a car equipped with such an engine could (barring mechanical breakdown) be driven indefinitely with zero fuel costs. Such a car would literally "run on air".

Although the size of the first stage expander will be much larger than the size of gasoline engines of equal power (because of the extremely high expansion ratios) its weight will be relatively low. Hence, the power-to-weight ratio of my multiple-stage condensing atmospheric engine should be fairly high relative to gasoline or Diesel engines.

Before considering any detailed structural designs it is important to point out and emphasize that the above performance of the engine given by equation 3 is based upon thermodynamic analysis assuming ideal operating conditions. Thus, the actual performance of these engines may be somewhat below that given in equation 3. On the other hand, multiple stage condensing atmospheric engines have many design variables that could be optimized to give theoretical performance figures significantly higher than those given in equation 3. Furthermore, by constructing sufficiently large engines, it is possible to obtain overall performances that approach ideal operating conditions. Consequently, when these considerations are factored into the actual design of condensing atmospheric engines, the resulting performance may be very close to that given by equation 3.

The current "state of the art" operating efficiencies of cryogenic expanders and compressors are about 85%. Cryogenic heat exchanges (and condensers) are about 90% efficient. (Some designs exceed 95%.) Pressure losses (i.e., line losses) can be easily compensated by compressing the liquefied cryogenic working fluids to slightly higher working pressures. The additional mechanical work consumed by operating at these higher pressures is relatively small and essentially negligible. In fact, the actual net output of stages two and three can be significantly increased by operating at 500 Atm working pressures instead of 300 Atm.

I shall now direct my attention to the practical engineering problem of transforming the above disclosed theory and operating principles for generating useful mechanical work from ambient heat energy of the environment into the actual physical form of a condensing atmospheric engine. However, at the outset we are confronted by a rather serious and fundamental problem that has no solution in the prior art. The required cryogenic expanders suitable for first stage condensing engines have to be capable of generating expansion ratios on the order of 300 in order to achieve the desired phase transformation ratios. But energy extracting, isentropic expanders capable of delivering expansion ratios of this magnitude do not exist in the prior art. Thus, one of the most important structural novelties of the present invention is the disclosure of a cryogenic, low pressure, work generating cold gas expander that is very nearly isentropic and capable of providing essentially unlimited expansion ratios and pressure ratios with variable mass flow. In the preferred embodiment this expander is a continuous flow rotating turbine.

Fig. 8 is a longitudinal perspective view illustrating the design and construction of a low pressure axial flow thermally insulated turboexpander 270 with unlimited and variable expansion ratios and pressure ratios. Fig. 9 is a schematic transverse cross section illustrating the design and construction of one of the spiraling expansion blades of the low pressure turboexpander shown in Fig. 8. Fig. 10 is a longitudinal perspective view illustrating the design and construction of a low pressure axial flow turborecompressor 272 that is driven by the power generated by the turboexpander 270. The turbocompressor 272 is designed to partially recompress the expanded air vapor which does not condense while passing through the solid phase condenser that is mounted between them. The expanded air vapor 274 leaving the turboexpander 270 is discharged directly into a vacuum chamber 276 that is maintained at a very low pressure. This vacuum chamber 276 is divided into two separate regions 275, 277 by the solid phase air condenser 278 that is mounted between these regions. The first region 275 begins at the discharge end of the turboexpander 270 and ends at the inlet portion of the condenser 278. The second region 277 begins at the vapor discharge end of the condenser 278 and ends at the inlet portion of the turborecompressor 272. The only way that expanded air vapor can reach the second half 277 of the vacuum chamber 276 is to pass through the solid phase air condenser 278.

The solid phase recompressor 280 is mounted inside the solid phase condenser 278. As shown in Fig. 10, the second stage condenser 282 (illustrated as element 44 in the block diagram of Fig. 5) is mounted in front of the turborecompressor 272. A connecting drive shaft 284, passes through the vacuum chamber 276 and connects the driving rotor 286 of the turboexpander 270 directly to the driving rotor 288 of the turborecompressor 272 such that the rotating turboexpander 270 supplies direct mechanical power to rotate the turborecompressor 272 for recompressing the noncondensed air. Since the rotors of the expander and compressor are joined together by the connecting drive shaft 284 to form a single rigid unit, the turbo expander/recompressor system has only one moving part. Hence, the system can be designed to operate smoothly and continuously almost indefinitely without mechanical breakdown.

As illustrated in Figs.8 and 10, the turboexpander 270, vacuum chamber 276, solid phase air condenser 278, solid phase air recompressor 280, turborecompressor 272 and second stage condenser 282 are all jointed together and mounted inside a single, thermally insulated, compact unit or module 290. This compact module design therefore obviates the need for a considerable amount of conduits, heat shields and related apparatus that would otherwise be needed if these components were designed and mounted inside separate units. Moreover, this compact unit module design feature also enables the incoming air to be expanded, condensed and recompressed in a very efficient and continuous process that is thermodynamically close to ideal adiabatic flow conditions.

In this first stage turbine condensing engine, the turboexpander 270 comprises three rotating spiraling expansion blades 292 specifically designed for low pressure operation. The blades 292 begin at the end of an annular air-inlet duct 294 with a variable throat radius $R_1$, with the rotor's drive shaft 286 passing through its center. As shown in Figs. 8 and 9, the radius of the spiraling expansion blades 292 steadily increase along the shaft 296 to some maximum value $R_2$ at the downstream end of the turboexpander 270. The clearance between the inside walls 298 of the turboexpander 270 and the rotating blades 292 is extremely small and on the order of 20 to 60 microns. The lateral end 300 of the blades 292 moving adjacent the turbine's inside walls 298 are thicker than the main body of the blades near the rotor shaft 286 and vary from about 3 blade thicknesses near the inlet to about 6 blade thicknesses near the outlet so that the boundary between the rotating blades 292 and the inside turbine walls 298 is essentially airtight. In order to minimize unwanted heat trasnfer between the beginning and end of the expander (where the tempeature difference is very high), the expansion rotor 286 and inside walls 298 of the expansion chamber and vacuum chamber 276 are constructed with material having very low thermal conductivity such as Teflon or glass composite material.

The boundary between the spiraling expansion blades 292, the turbine walls 298 and the rotor shaft 286 defines three spiraling airtight passageways 306 with increasing cross sectional area. Consequently, these passageways represent spiraling expansion chambers that spiral around the rotor shaft 286. If a partial vacuum with low pressure $P_2$ is continuously maintained at the end 308 of the blades 292 (i.e., inside the vacuum chamber 276) then air, at ambient atmospheric pressure $P_1$, flowing into the spiraling expansion chambers will gradually decrease in pressure as it flows through the passageways 306 by virtue of its expansion. This decreasing air pressure generates pressure differentials between both sides of all the blades 292 along their entire surface area. These pressure differentials generate unbalanced forces on the blades 292 that result in smooth and continuous rotational torque on the rotor shaft 286.

Atmospheric air at some initial temperature $T_1$ and ambient atmospheric pressure $P_1$ is continuously fed into the turboexpander through a variable diameter annular air-inlet duct 294 at a steady, continuous rate and is uniformly expanded as it passes through the turbine.

Since heat flow through the walls of the turboexpander is essentially eliminated by cryogenic insulation, the expansion is very nearly isentropic. If the pitch of the blades 292 is designed to maintain a constant axial flow velocity through the turbine equal to the axial inlet velocity, then the air emerges at the end of the turbine with an expansion ratio r given by

$$r = \frac{R_2^2 - R_0^2}{R_1^2 - R_0^2}$$

where $R_0$ denotes the radius of the rotor's drive shaft 286.

Since the throat radius $R_1$ is variable and can range from $R_1 = R_0$ to some maximum value equal to the initial blade radius, this expansion ratio can be varied from infinity to some minimum value (which is about 100). It was determined above that if the inlet air temperature and pressure is 200°K and 1.0 Atm respectively, an expansion ratio of r = 300 will reduce the expanded air to a metastable supersaturated vapor as it is discharged into the vacuum chamber 276 (Fig. 8). Thus, for these inlet conditions, if $R_0$ = 1.0

cm and $R_2$ = 75 cm, then a throat radius $R_1$ = 4.444 cm will produce an expansion ratio of 300 and the expanded air 310 entering the vacuum chamber 274 will be reduced to a supersaturated vapor at 18.8°K. The ability to change the expansion ratio while the turboexpander is operating is a valuable design feature since it allows a means for controlling the mass flow rate $\dot{m}_1$ of incoming air --and thus the engine's power.

A mechanical actuator 312 is connected to the variable diameter annular air-inlet duct 294 which enlarges and reduces the radius of this duct from a minimum of $R_1 = R_0$ to some maximum value $R_1 = R_{max}$. When $R_1 = R_0$, the inlet duct 294 is completely closed and no air passes through the turboexpander 270. (The expansion ratio r in this case is infinity.) When $R_1 = R_{max}$, the inlet duct 294 is completely open and the air flowing into the turboexpander 270 is maximum. (The expansion ratio is minimum in this case.) The actuator 312 is controlled by an electrical servo motor 314 that is activated by an energizing current from some outside source.

A thermally insulated air-inlet conduit 316 is connected to the variable annular air-inlet duct 294 and has an inside radius greater than $R_{max}$. The other end of this air-inlet conduit 316 is connected to a thermally insulated cold air reservoir mixing vessel 164. All of the previously condensed air passing through the third stage and discharged from the last expander 72 (fig. 5) is recycled back into the first stage turboexpander 270 at atmospheric pressure by feeding it into this cold air reservoir vessel 164 via conduit 318. Another conduit 166 feeds additional pre-cooled air taken from the open atmosphere at ambient atmospheric pressure into the cold air reservoir vessel 164 where it is mixed with the recycled air before entering the turboexpander 270. The other end of this conduit 166 is connected to a heat exchanger 24. This heat exchanger 24 serves as an ambient air pre-cooler for pre-cooling this new air taken from the atmosphere before depositing it into the cold air reservoir vessel 164. This new air is necessary to make up for that portion of previously expanded air passing through the first stage that does not condense. As described above, the coolant circulating through this heat exchanger 24 is very cold oxygen gas circulating through the second stage at points $D_2$ and $F_2$ shown in Fig. 5. (As demonstrated above, if the expansion ratio is 300, then the equilibrium mixed air temperature inside the cold air reservoir vessel 164 should not exceed 200°K.

Before feeding the new atmospheric air taken from the atmosphere into the pre-cooler 24, it is first fed through a filtering system 320 (Fig. 8). This filtering system 320 is designed to remove particulate contaminates from the incoming air such as dust particles and the like that could enter the turbo expander/recompressor system and scratch or otherwise damage its inside surfaces or other moving parts. Other traps 322 may also be inserted at various flow points for absorbing and removing water vapor. These filters and traps could also remove other vapors and foreign substances that could be present in the incoming new air. An electric fan 324 can be mounted adjacent some of the filters to insure an adequate flow of air through the filters, traps and heat exchanger in order to compensate for any loss of air pressure resulting while flowing through these systems (such that the initial pre-expansion air pressure $P_1$ is about equal to ambient atmospheric pressure).

The design of the turborecompressor 272 (Fig. 10) is essentially identical to that of the turboexpander 270. The spiraling rotating blades 326 of the turborecompressor 272 continually removes the noncondensed gaseous air from the after portion 277 of the vacuum chamber 276 in order to maintain its very low pressure. This turborecompressor 272, recompresses the noncondensed air to a certain intermediate pressure $P_1' < P_1$ before it is completely expelled from the module 290. This is accomplished by installing a one-way, presure activated relief valve 328 at the discharge end 330 of the turborecompressor 272. If the air pressure at the discharge end 330 exceeds $P_1'$, the relief valve 328 automatically opens and the air is fed into a discharge conduit 332. This discharge conduit 332 is connected to a heat exchanger 334, where the air is isobarically cooled before being compressed all the way back to ambient atmospheric pressure via a relatively small compressor 336.

The heat exchanger 334 corresponds to the heat exchanger 36 shown in Fig. 5. This heat exchanger 334 is devided into two thermally insulated sections (i.e., it is a two stage, compound heat exchanger). Cold air at about 168°K taken from the third stage engine at points M and O (Fig. 5) is introduced into the first section of the heat exchanger 334 and circulated through it as a cooling medium. This medium is in thermal contact with the partially recompressed air that is also introducted into this section from the turborecompressor 272 with a temperature approximately equal to 250°K. Since there is 2x1.024 gm of low temperature coolant circulated for every gram of partially compressed air, this section will cool the air to about 195°K. The cooling medium is then withdrawn from the heat exchanger 334 and introduced into their respective ambient heat exchangers 66 and 70 at points M and O (Fig. 5). The new cooling medium is compressed liquefied oxygen and compressed liquefied air at about 90°K, taken from the second stage engine at point $B_2$, and from the third stage engine at point K respectively, and introduced into the second half of the heat exchanger 334. The pre-cooled air at 195°K is also introduced into this section and is further cooled by the cryogenic coolants. Since there is .577 gm of liquid oxygen and 1.024 gm of liquid air circulated through this section for every gram of partially compressed air, this section of the heat exchanger 334 will cool the air to about 120°K. After circulating through the second stage of the heat exchanger 334, the cooling mediums are returned to points $B_2$ and K (Fig. 5) and the very cold partially compressed air is fed into the second recompressor 336 where it is compressed to ambient atmospheric pressure.

Since the thermal energy density $\hat{W}$ of a compressed gas at temperature T that can be converted into mechanical work by an adiabatic expansion (into a vacuum chamber) is given by

$$\hat{W} = \frac{RT_1}{M(\gamma-1)}$$

where R is the universal gas constant equal to 8.3144 Joules/(Mole °K) and where $M$ is equal to the molecular weight of the gas (equal to 28.975 for air), the output work $W_{e_1}$ of the turboexpander 270 is equal to m $\eta$ $\hat{W}$ (200°) where $\eta$ is the thermal efficiency given by $1 - r^{1-\gamma}$ = .906 and where m = total amount of air expanded = 2.024 gm. Hence, $W_{e_1}$ = 253.59 Joules.

If all of this mechanical output work generated by the turboexpander 270 were used to drive the turborecompressor 272 to isentropically recompress the 1.00 gm of noncondensed air, the resulting temperature of the recompressed air would be about 350°K and the pressure would be about ambient atmospheric pressure. Notice that this temperature is 150° higher than the 200° K pre-expansion temperature. This is because the noncondensed air has a much higher entropy than the pre-expanded air.

It is much more efficient to carry out the recompression in two stages separated by a cooling step. Thus, as described above, the turborecompressor 272 will serve as the first stage recompressor and will recompress the noncondensed air vapor to an intermediate pressure $P_1'$ where the corresponding temperature $T_1'$ = 250°K. The corresponding compression ratio r = 567. Hence, the thermal efficiency $\eta$ of the turborecompressor is .928. Therefore, since only one gram of air is recompressed, the amount of work $W_{c_{11}}$ used by the turborecompressor 272 is equal to $\hat{W}$ (250°)/$\eta$ = 186.27 Joules. Thus, the amount of net output work generated by the turbo expander/recompressor system will be equal to $W_{e_1}$ - $W_{c_{11}}$ = 67.32 Joules which is more than enough needed to complete the recompression after the cooling step. Since the partially compressed air has a temperature of only 120°K, the amount of mechanical work needed to complete the recompression is relatively small. This work can be reduced by employing further cooling steps similar to that described above. (The total amount of work required for the recompression can also be reduced by optimizing the temperature $T_1'$ of the partially compressed air discharged from the turborecompressor 272.) After the air is recompressed back to ambient atmospheric pressure $P_1$, it is exhausted into the open atmosphere. It is important to point out again and emphasize, that this noncondensed exhaust air that is discharged back into the open atmosphere will be exceptionally pure and free of essentially all pollution.

The design and operating features of the solid phase air condenser 278 and solid phase air compressor 280 are illustrated in Figs. 8,11, and 12. As is shown in these figures the solid phase condenser 278 comprises a plurality of parallel double walled cylindrical condensing tubes 192. Liquefied hydrogen 194, at about 18°K, is circulated through the annular regions 196 inside the double walled condenser tubes 192 and is in direct thermal contact with the inside walls 198 of the condensing tubes 192 (which are the condensing surfaces of the condensing tubes 192). This liquid hydrogen enables the condensing surfaces 198 to be maintained at a very low temperature while the engine is turned off so that it can be restarted. The liquefied hydrogen thus serves as a cryogenic "primer" before the engine is started. After the engine is started, the supersaturated metastable air passing through these cryogenic condensing tubes condense into solidified air crystals that form a layer of condensation 224 all along the inside walls 198 of these condensing tubes 192. There is very little heat transfer between the condensing metastable air vapor and the liquefied hydrogen while the engine is operating.

The condensing tubes 192 can be constructed with aluminum or some other suitable material with high thermal conductivity. The space 200 between adjacent condensing tubes 192 is completely blocked off from the vacuum chamber 275 by a thermally insulated barrier 202 so that none of the expanded air vapor can enter this region. Consequently, the only way that the expanded air can pass from the first region 275 of the vacuum chamber 276 and enter the second region 277 of the vacuum chamber is to pass through the condensing tubes 192.

After passing through the turboexpander 270 and undergoing a nearly isentropic expansion on the order of 300, the expanded air is discharged into the first region 275 of the vacuum chamber as very cold metastable supersaturated air vapor. Since there is a small pressure differential, the supersaturated air vapor passes into the condensing tubes 192 and begins to solidify into air crystals on top of previously solidified air. The condensing tubes 192 are sufficiently long such that essentially all of the metastable, supersaturated air vapor condenses on them before reaching the end. That portion of the air that is not metastable, passes through the condensing tubes and escapes through a plurality of gaseous air discharge passageways 204. These discharge passageways lead directly into the annular second half 277 of the vacuum chamber 276.Since the noncondensed air is drawn into the recompression chamber by virtue of the moving recompression turbine and since the condensing air results in a reduction of its specific volume by almost two orders of magnitude, the vacuum environment of the vacuum chamber 277 is automatically maintained at a very low pressure continuously.

The mass flow rate $\dot{m}_c$ of air condensing on the condensing walls 198 is given approximately by the equation

$$\dot{m}_c = kAP\sqrt{\frac{M}{T}}$$

where P denotes the chamber pressure, T denotes the wall temperature and $M$ denotes the molecular weight of air (28.9752). The total area of the condenser walls 198 is denoted by A and k is a constant. If the units of A, P and T are $cm^2$, torr (i.e., mm of Hg) and °K respectively, then k = 0.05833. (See, Handbook of High Vacuum Engineering, Reinhold Publishing Corporation, New York, 1963, pp. 72-76, by H.A. Steinherz.) Thus, for example, if T = 20°K, P = $P_2$ = 0.100 torr and A = 20,000 $cm^2$ (2.0 $m^2$), then $\dot{m}_c$ = 140.4 gm/sec.

The solid phase compressor 280 is mounted inside the condenser tubes 192. Each tube 192 (Figs. 8,11,12) is fitted with a spiraling scraper blade 210 that is attached to a relatively small rotating axle 212 mounted along the tubes longitudinal central axis. Each scraper blade 210 is thin and narrow and is attached to the rotating axle 212 by small transverse connecting rods 214. Each scraper blade 210 is maintained in a non-contacting position with the external tube wall 198. This allows a relatively thin gap between the scraper blades 210 and the inner tube walls 198 which is filled by a thin layer of solidified air crystals. Since the scraper blades 210 and rotating axles 212 are relatively narrow, they do not block the air vapor 216 from entering the condenser tubes 192 and moving along their longitudinal axis.

The forward end of the rotating axles 212 are all connected to a flat grid 218 that is mounted at the forward end of, and perpendicular to, the condenser tubes 192. Mechanical rotating gears 220 connecting all of these rotating axles 212 are connected to a central rotating axle 222 which is, in turn, connected to the engine's drive train (Fig. 8). Consequently, when air is fed into the turboexpander 270, the expanding air drives the drive train which, in turn automatically rotates all of the scraper blades 210. The rotation rate of the scraper blades 210 is relatively low and on the order of two to four revolutions per minute.

The rotating scraper blades 210 continuously scrape off the top layer of the solidified air crystals 224 from the external condenser tube walls 198 and moves them to the end 226 of the condenser tubes 192. Fig. 12 is an enlarged, longitudinal cross section of the end portion of one condensing tube 192 illustrating the construction of one gaseous air discharge passageway 204 for the noncondensing air 228. As illustrated in Fig. 12, the rotating scraper blade 210 is not in actual physical contact with the external walls 198 of the condensing tubes 192. Thus, there is a gap between the rotating blade 210 and the external wall surface 198 that is filled by a thin layer 230 of solidified air crystals. The purpose for this layer is to provide the noncondensed metastable air molecules ideal surfaces on which they can solidify on. When the rotating scraper blade 210 scrapes off the top layer of this solidified air, the remaining layer 230 still provides an ideal condensing surface. The frictional heating effect of the blade moving over the solidified air crystals is essentially zero. The gaseous air discharge passageway 204 extends a short distance 232 into the condensing tube 192, (in a perpendicular direction from the inside wall surface 198) to a distance exactly equal to the gap between the rotating scraper blade 210 and the wall surface 198. Consequently, when the scraper blade 210 is rotated inside the condensing tube 192, it just barely brushes up against the end of the discharge passageway 204, and therefore keeps it open and clear of solidified air crystals.

The condensing tubes 192 are extended beyond the discharge passageways 204 by converging, single walled, co-axial tubes 234 of very low thermal conductivity (such as Teflon or epoxy resin). The diameters of these tube extensions 234 decrease to about one-fourth of the diameter of the condensing tubes 192. The spiraling scraper blades 210 are also extended beyond the end of the condenser tubes 192, into these new tube sections 234. However, after a relatively short distance, the gap between the scraper blades 210 and the tube wall surfaces is narrowed until it is reduced to zero. Beyond this point 236 (Fig. 12) the spiraling scraper blades 210 always remain in physical contact with the tube walls of the new tube sections 234. The blades also become smooth closed surfaces beyond this point 236 and are connected directly to the rotation axles 212 (eliminating the need for transverse connecting rods). Thus, these closed surface rotating blades 238 force the solidified air crystals to move through the new tube sections 234. Consequently, the rotating blades 238 begin to squeeze the solidified air crystals 240, moving in these new tube sections, similar to a screw compressor. Thus, the result is a solid phase recompression of the solidified air crystals. The combination of the rotating closed surface blades 238, rotating inside the new tube sections 234, comprise a "screw compressor" and represents the solid phase isothermal recompressor system. It is powered by a relatively small fraction of the mechanical output work of the turboexpander 270.

The above described turbo driven, first stage air expander/recom pressor with associated vacuum chamber, solid phase condenser and solid phase recompressor, represents the first and most important stage of my multiple stage condensing atmospheric engine. This first stage generates the solidified air upon which the remaining two stages utilize to generate most of the mechanical work. Without the solidified air generated continuously by the first stage, the second and third stages would be inoperable.

The design of the second stage condenser 282 is based on simply extending the insulated tube sections 234 carrying the compressed solidified air crystals 240 directly into the condenser 282. Thus, as shown in Fig. 10, after a relatively short distance, these insulated tube sections 234 pass into the thermally insulated second stage condenser 282. However, the tube sections 242 inside the condenser 282 are made of aluminum or some other material with high thermal conductivity in order to obtain a high heat flux through its walls between the very cold slidified air crystals 240 inside the tubes 242 and the warmer saturated vapor 244 of the second stage. A plurality of aluminum fins 246 are mounted on the tubes 242 inside the condenser 282 to enhance the heat transfer process. The incoming solidified air crystals 240 extract the latent heat of condensation from the saturated second stage vapor 244 which simultaneously melts the solid air crystals 240 into liquid air 248 and isothermally condenses the incoming saturated vapor 244 into liquid 250. Thermally insulated conduits 252 carry all of the liquid air coming out of the tubes 242 to a main liquid air conduit 254. This conduit contains a one-way pressure activated relief valve 256 that opens only when the pressure of the liquid air inside the tubes 242 exceeds 1.0 Atm. This pressure activated relief valve 256 automatically regulates the pressure generated by the solid phase recompression system so as to produce 1.0 Atm of liquefied air pressure at the discharge point.

As shown in Fig. 10, the incoming saturated second stage vapor 244 enters the condenser 282 at point $H_2$ (Fig. 5) via a thermally insulated conduit 258, circulates around the cooling fins 246, liquefies and leaves the condenser 282 through a thermally insulated discharge conduit 260 at point $A_2$. As described above, the liquefied cryogenic air emerging from the condenser 282 at point J and the liquefied cryogenic second stage working fluid emerging from the condenser 282 at point $A_2$ can be utilized as cryogenic first stage engine coolants before they are compressed to their high working pressures.

In order to enable some embodiments of the atmospheric engine to operate on an intermittant basis such as an automobile engine where the engine can be stopped and left in the off condition for extended time periods, it would be desirable to maintain the entire first stage (including the second stage condenser) within a long lasting cryogenic environment. For example, in this embodiment, all of the various components could be protected by a thick inner jacket of evacuated multilayer cryogenic insulation 262 (Fig. 8). This jacket could then be completely enclosed within a thick Dewar jacket vessel 264 containing a relatively large amount of liquefied air 266. Finally, the cryogenic Dewar vessel 264 could itself by completely enclosed within a thick outer jacket of evacuated multilayer insulation 268. The liquid hydrogen 194 surrounding the condensing tubes 192 would maintain these tubes at the condensing temperature such that the condensation process could begin as soon as the expanded air enters the condensing tubes 192.

Aside from the fact that the second and third stage cryogenic engines of my multi-stage engine are closed cycle, most of the operating components are similar to those disclosed by E.H. Schwartzman in his U.S. Patent No. 3,451,342 filed October 24, 1965 entitled "Cryogenic Engine System and Method". Consequently, the detailed construction of these stages is considered to be within the prior art and no detailed description is given herein.

If, as described above, the turboexpander had rotor dimensions $R_1$ = 4.44 cm and $R_2$ = 75.00 cm, then $\dot{m}_1 \approx$ 100 gm/sec and the net power output would be about 50 KW (68 HP). The overall diameter of the turbo expander/recompressor system would be about 1.6 m (5.25 ft) and the overall length would be about 2.5 m (8.20 ft). These dimensions could easily be accumulated by road vehicles.

It is important to point out and emphasize that the condensing atmospheric engine described above only represents one particular embodiment where the primary cryogenic working fluid used in the first and third stages is air, the secondary cryogenic working fluid used in the second stage is oxygen, and where the first stage condensing engine has a semi-open operating cycle with a fixed pre-expansion air pressure equal to 1.0 Atm. However, the engine could also be operated with a closed cycle first stage cryogenic condensing engine using the same working fluids without changing any of the thermodynamic flow parameters by isobarically cooling the high temperature exhaust air discharged from the last recompressor 38 at point H (Fig. 5) to ambient atmospheric temperature and recycling it back into the first subambient heat exchanger 24 at point A. This can be easily accomplished by inserting an ambient heat exchanger between points H and A and utilizing the natural environment as an infinite heat sink to cool the noncondensed repressurized air back to ambient atmospheric temperature (thereby reducing its entropy). The performance of this embodiment would be essentially identical to that of the semi-open cycle embodiment described by equation 3. However, the closed cycle embodiment would make it easier to change the pre-expansion pressure $P_1$ of the condensing expander 28 to a new operating level above (or below) 1.0 Atm without having to install a special compressor. By operating the engine with a higher initial pressure $P_1$ the condensation ratio *R* could be increased thereby significantly increasing the engine's overall performance. Moreover, various other cryogenic working fluids could be used that would also increase performance. In particular, there is obviously some combination of primary and secondary cryogenic working fluids, together with a certain initial pressure $P_1$ that would yield optimum engine performance. These optimum closed cycle embodiments would be ideal engines for submarines where access to the open atmosphere is restricted. They may also be used for propelling large surface ships where the ambient heat exchangers could be immersed in flowing water. However, in properlling land vehicles (such as rail and road vehicles) and aircraft, the semi-open cycle embodiments may be more efficient. The semi-open cycle embodiments also have the advantage of actually cleaning the atmosphere as they operate because various air filters and traps could be installed to filter out foreign particles and substances prior to expansion. Operating the engine as an air liquefying machine would obviously require a semi-open cycle first stage. My main point in these remarks is that many different embodiments of the engine are possible and the optimum embodiment depends upon the particular application. Aside from using different cryogenic working fluids with different values for the thermodynamic flow parameters, the only major difference between the semi-open cycle embodiments is that the closed cycle embodiments recycle the recompressed noncondensed primary working fluid from point H to point A via a heat exchanger. All other corresponding components are essentially identical.

Fig. 13 is a ablock diagram tht illustrates the basic operating principals of a closed cycle first stage cryogenic condensing engine. The working fluid can be air or some other cryogen that is vaporizable at ambient temperature. In this closed cycle embodiment, the cycle begins by withdrawing cold, partially comprssed subambient working fluid vapor at an initial pressure $P_1$ from a thermally insulated mixing vessel 600 and feeding it into an isentropic condensing expander 602 where it is expanded with an expansion ratio of several hundred and discharged into a vacuum chamber 604. The expansion raio is sufficiently large such that the expanded gas is reduced to a supersaturated metastable vapor. This vapor is then fed into a solid phase condenser 606 where a large fraction of the vapor solidifies into the solid state. That fraction which does not condense is withdrawn from the condenser 606 and fed into a recompressor 608 where it is recompressed to some intermediate pressure $P_1^{*} < P_1$ . It is then fed into a heat exchanger 610 where it is cooled. The partially recompressed noncondensed vapor is then injected into another recompressor 612 where it is compressed back to the initial pressure $P_1$. It is then fed into another heat exchanger 614 where it is cooled a second time. After this second cooling step, the noncondensed vapor is withdrawn from the heat exchanger 614 and recycled back into the cold gas mixing vessel 600. The solidified portion of the expanded vapor is withdrawn from the solid phase condenser 606 and utilized to convert ambient heat energy of the natural environment into mechanical work by harnessing the thermal potential difference between the solidified gas at cryogenic temperature and the natural environment at ambient temperature. As described above, this energy conversion process is accomplished by a second stage cryogenic engine 616 and a third stage cryogenic engine 618. The vapor discharged from the third stage engine 618 is returned to the first stage condensing engine by recycling it back into the cold gas mixing vessel 600 as illustrated in Fig. 13. The only basic difference between this first stage closed cycle embodiment and the semi-open cycle embodiment (as described in Fig. 5) is that after the noncondensed working fluid is recompressed back to the initial pressure $P_1$, it is recycled back into the cold gas mixing vessel 600 instead of exhausting it into the open atmosphere. Thus, the working fluid does not have to be atmospheric air.

In some closed cycle embodiments, it may be possible to design the initial pressure $P_1$ sufficiently high such that the condensing expansion allows the supersatured vapor to condense directly into the liquid phase. In this case, the second stage engine could be completely eliminated which would simplify the engine's design. Many other variations and embodiments of the engine are possible.

Still another variation that can be of significant practical value involves inserting pressure vessels between the various ambient air vaporizers (heat exchangers) and expanders. Fig. 14 illustrates this variation by showing an ambient heat exchanger 474 that is heated by the ambient environment 476. The pressurized gaseous working fluid 478 leaves this heat exchanger 474 by a pressure conduit 480 and is transferred to a relatively large pressure vessel 482. The compressed gas 478 inside the pressure vessel 482 is fed to an expander 484 by another pressure conduit 486. A one-way check valve 488 is mounted on the conduit 480 between the heat exchanger 474 and the pressure vessel 482 to prevent any gas already inside the pressure vessel 482 from flowing back into the heat exchanger 474 due to possible pressure variations inside the heat exchanger 474. This pressure vessel 482 represents a compressed gas, load leveling, energy reservoir for storing a considerable amount of pressurized gaseous working fluid (at ambient temperature) for the expander 484. This compressed gas energy reservoir enables the power output of the expander 484 to be rapidly varied over a wide range without requiring large and rapid changes in the mass flow rate $\dot{m}_1$ of the gas flowing through the first stage. When the engine is turned off, a valve 490 mounted on the conduit 486 between the pressure vessel 482 and the expander 484 is closed thereby preventing the pressurized gas inside the pressure vessel 482 from escaping after the engine is turned off. When the engine is restarted, the expander 484 utilizes the reserve compressed gas inside the pressure vessel 482 to generate instant power. This system is particularly useful in the design of air-powered condensing atmosphered engines for automobiles.

By constructing these pressure vessels 482 with thick walled ultra high strength glass fiber or composite material, air pressures on the order of 500 Atm will be possible. Since the volume energy density of compressed gas at pressure P is equal to $P/(\gamma-1)$, the stored energy density corresponding to a pressure of 500 Atm will be $1.2 \times 10^8$ Joules/m$^3$. Therefore, these pressure vessels could contain an enormous amount of stored energy that could propel a road vehicle many kilometers without having to operate the condensing atmospheric engine. Consequently, instead of designing a large condensing atmospheric engine capable of developing 50 KW of continuous power to propel an automobile indefinitely without stopping, a more practical automobile atmospheric engine might be one that is relatively small and capable of developing only 5 KW of power and used to periodically charge up the storage vessels. Such an engine would be equipped with a plurality of pressure transducers 492 that sense the air pressure in the various pressure vessels. When the air pressure drops below a certain minimum, the condensing atmosphere engine is automatically turned on to restore the pressure. For example, the atmospheric engine could operate automatically all night while the automobile is parked in a garage such that by morning, all of the pressure storage vessels are fully charged. The automobile could then be driven during the day with periodic power surges exceeding 200 KW or more. Since an enormous amount of power could be developed using these ultra high pressure storage vessels, the complete power plant would be relatively small but capable of outperforming many internal combustion engines designed for propelling automobiles. Moreover, unlike the basic condensing atmospheric engine, the motive power can be developed instantly without having to vaporize any cryogenic working fluid by circulating it through ambient heat exchangers. This engine design concept is similar in principle, to that of electric cars but these engines will be much more powerful.

In another variation useful in the design of automobile engines, the condensing atmospheric engine could be designed primarily to produce small quantities of liquid air over extended time periods. The liquid air could be stored in thermally insulted cryogenic storage vessels and used primarily to power an open-cycle cryogenic engine. The possibility of propelling an automobile by an open-cycle cryogenic engine was discussed by M.V. Sussman in his paper "Liquid Nitrogen As An Energy Source For An automotive Vehicle," Advances In Cryogenic Engineering, Vol. 25, 1980, pp. 831-837. However, unlike Sussman's engine, this engine would be capable of operating indefinitely without stopping because the liquid air is being continuously replenished by the condensing atmospheric engine.

In still another variation an additional compressor can be operatively interposed between the exhaust duct of at least one expander and the inlet duct of the following serially connected, heat exchanger in order to recompress the expanded working fluid to a higher pressure before it is reheated. This will increase the net output of the engine and give it a higher thermal efficiency.

In order to achieve the required high expansion ratios for the last expansion step of the second stage (to reduce the expanded working fluid to a sasaturated vapor before the condensation step) the final expansion step can be carried out through a plurality of serially connected expanders instead of one expander.

In order to obtain more control over all of the stages of my cryogenic engines, all of the compressors could be designed with variable output pressure and all of the expanders could be designed with variable expansion ratios. This would also provide a means for effectively controlling the mass ratios between the first and second stages and fine tuning the engine for optimum performance.

Still another variation may include compressing the incoming air to a pressure somewhat above ambient atmospheric pressure prior to expansion. The compressed air could be cooled by the ambient environment to ambient atmospheric temperature before being cooled to subambient temperatures prior to entering the first stage expander. This would increase the condensation ratio.

Another variation might utilize the relatively hot recompressed noncondensed air that is discharged back into the open atmosphere as a high temperature heat reservoir that is above ambient atmospheric temperature. For example, the hot air may be circulated through one or more of the ambient heat exchangers 48, 52, 56, 62, 66, and 70 (Fig. 5) in order to raise the temperature of the compressed working fluid to above ambient temperatures before expansion. Some of this heat energy could then be converted into mechanical output work when the compressed gas is expanded --thus recovering some of the mechanical work expended during the final recompression process.

Although essentially all particulate contamination of ambient atmospheric air (such as dust particles, smoke particles, etc.) can be removed from the air before the air is expanded, it may be impractical to remove all of the various dissolved vapors from the air (such as water vapor, carbon dioxide, etc.) before the air is expanded. These substances can be expanded and condensed inside the solid phase condenser along with the air. However, when the solidified air is liquefied by passing through the second stage condenser, many of these substances will remain solidified at 80°K. Thus, they can be easily removed from the liquid air by filtering the liquid air as it is discharged from the second stage condenser before it enters the compressor of the third stage. If these solidified substances (such as ice and solid carbon dioxide) are not harmful to the environment, they could be immediately returned back to the environment. However, if they are harmful, they could be accumulated inside a separate vessel for disposal at a later time in a safe disposal site. Thus, the exhaust air discharged from air-powered condensing atmospheric engines will be purer and cleaner than the ambient atmosphere. Large numbers of automobiles propelled by air-powered condensing atmospheric engines in large urban areas could then clean the atmospheric pollution in these urban areas caused by industrial factories and manufacturing centers.

Condensing atmospheric engines could also be designed for propelling aircraft. Since these engines have a high power-to-weight ratio and do not require any fuel tanks (or fuel load) they would be ideal for propelling aircraft of almost unlimited size with enormous payloads. Moreover, since these engines can operate continuously without stopping (barring mechanical failure) such aircraft would have unlimited range and could remain aloft cruising above the Earth's surface indefinitely. (Propeller driven flying wings would be the most suitable design.) They could actually be designed as self-contained flying cities with thousands of inhabitants.

Condensing cryogenic engines would also be ideal for propelling large ocean going vessels. Such vessels would also have unlimited range. In this application, the ambient heat exchangers 48, 52, 56, 62, 66, and 70 (Fig. 5) could be immersed in and maintained in thermal contact with the ambient water. The heat transfer process would be very efficient because water has a high thermal capacity.

Still another application for my engine would be the generation of large amounts of bulk electric power for public utility companies. These engines could be huge and their drive shafts would be coupled directly to very large electric generators. Such power plants drawing thermal energy from the ocean, could generate cheap electric power on an unprecedented scale. They could dwarf in magnitude the maximum power output of all other types of power plants including the largest hydroelectic, fossil fuel, nuclear fission or even the nuclear fusion plants proposed for the next century.

Condensing atmospheric engines could be used to generate cheap electric power at electric generating plants where large bodies of water are unavailable. The large ambient air heat exchangers could be mounted to take advantage of the extra heating effect of incident solar radiation falling on the thermal surfaces of the exchangers. (Large reflectors could be mounted around the periphery of the heat exchangers to amplify this radiation.)

Other embodiments of my atmospheric engine can be relatively small and adapted for generating small amounts of electric power for individual homes and apartments. These power generators could range from about 2.0 KW up to 200 KW and could be stored inside a garage or basement. (They would also provide free refrigeration.) All home heating would be electric. Any excess electric power not consumed could be fed into the local electric power grid (through the same power lines used to receive it), and sold to the various electric utility companies for a profit. Thus, instead of receiving bills from a utility company for using electric power, the home owners would be receiving payments for generating electric power.

Finally, since all of the condensing cryogenic engines disclosed herein operate silently, without consuming any fuel, and without discharging any combustion exhaust or nuclear waste products into the environment, these engines eliminate all noise pollution, thermal pollution and air pollution. In fact, semi-open cycle condensing atmospheric engines actually clean the air as they operate because essentially all particulate contamination (such as smoke particles, dust particles, etc.,) along with many foreign chemical vapors are filtered out and removed from the ingested air by various filters and traps. Thus, the noncondensed gaseous air that is discharged back into the atmosphere will be exceptionally clean and free of essentially all pollutants. Thus, my condensing atmospheric engines represent the ideal ecological engine in that they will pre serve the overall ecological and thermal balance between man and the natural environment indefinitely into the future regardless of how much power mankind wishes to produce with these engines. For this reason, my condensing atmospheric engine may represent the ultimate power plant. It can provide a means for generating virtually unlimited amounts of power with zero fuel costs, indefinitely into the future --while simultaneously cleaning the environment.

From the foregoing description, it will thus be evident that the present invention provides a vastly improved method and apparatus for generating mechanical work and power. As various other changes and modifications can be made in the above method and apparatus without departing from the spirit or scope of the invention, it is intended that all subject matter contained in the above description or shown in the accompanying drawings should be interpreted as illustrative and not in a limiting sense.

## Claims

1. A method for converting natural heat energy of the ambient environment into mechanical work comprising the steps of:
compressing a subambient temperature liquefied working fluid vaporizable at ambient temperature to an initial working pressure:
introducing said compressed subambient temperature working fluid into a heat exchanger mounted in thermal contact with the ambient environment for heating said working fluid by absorbing natural heat energy from said natural environment thereby vaporizing said working fluid to a compressed gas;
expanding said heated compressed gas through an expander means whereby a portion of said natural heat energy absorbed from said ambient environment is converted into mechanical work; and
condensing a portion of said working fluid primarily by expanding said gas inside an expansion chamber with a sufficiently large expansion ratio to extract a sufficient amount of thermal energy from said gas to transform a portion of said gas into a supersaturated vapor at low subambient temperatures so that a portion of the working fluid condenses.

2. A method as set forth in Claim 1 wherein said working fluid is atmospheric air and further comprising the steps of:
expelling at least a portion of the atmospheric air working fluid which does not condense into the open atmosphere with a relatively high entropy; and
ingesting an equal portion of new air from the atmosphere at a relatively lower entropy such that the amount of air condensed by said condensing step upon repeating the cycle remains substantially constant.

3. A method as set forth in Claim 2 wherein said condensing step comprises:
expanding said atmospheric air working fluid into a vacuum chamber means with an expansion ratio exceeding 100, such that a portion of said expanded air is transformed into a supersaturated vapor at cryogenic temperatures so that a portion of the air condenses inside said vacuum chamber means;
removing said condensed air from said vacuum chamber means; and
maintaining the vacuum inside said vacuum chamber means by removing uncondensed gaseous air.

4. A method as set forth in Claim 3 wherein said condensing step transforms a portion of said air into its solid phase and further comprising the steps of:
melting said solidified air to liquid air at cryogenic temperature;
compressing said liquefied air to some initial working pressure significantly greater than ambient atmospheric pressure;
expanding said heated compressed gaseous air inside the expander means; and
recycling said expanded air back into said expansion chamber.

5. A method as set forth in Claim 4 wherein said melting step comprises the steps of:
utilizing said solidified air as a low temperature heat sink for absorbing latent heat of condensation from a secondary cryogenic working fluid circulating through a secondary cryogenic condensing means of a secondary closed cycle condensing cryogenic engine whereby said solidified air is melted to liquefied air by absorbing heat from said secondary working fluid thereby liquefying said secondary vapor;
withdrawing said melted liquefied air from said secondary condensing means; and
utilizing natural thermal energy of the ambient environment as a high temperature heat reservoir for said secondary closed cycle condensing cryogenic engine whereby said secondary engine operates by converting additional heat energy absorbed from the natural environment into additional mechanical work while melting said solidified air to liquefied air.

6. A method as set forth in Claim 5 wherein said step of utilizing said solidified air as a low temperature heat sink for a secondary closed cycle condensing cryogenic engine comprises the steps of:
compressing said liquefied secondary cryogenic working fluid to a high pressure significantly above ambient atmospheric pressure;
feeding said compressed secondary cryogenic working fluid into a plurality of serially connected ambient heat exchangers maintained in thermal contact with the ambient environment for heating said compressed cryogenic fluid by absorbing natural heat energy from the environment;
converting a portion of said natural heat energy absorbed by said compressed secondary cryogenic working fluid by a like plurality of expanders interposed between adjacent heat exchangers; and
recycling the expanded secondary working fluid vapor discharged from the last expander of said plurality of expanders back into said secondary condensing means to reliquefy said vapor and repeat said cycle.

7. A method as set forth in Claim 1 further comprising the step of mounting a pressure vessel means operatively interposed between at least one ambient heat exchanger means and its adjacent downstream expander for accumulating and temporarily storing heated compressed gas discharged from said heat exchanger before expanding said gas in said expander for load levelling and a compressed gas energy storage reservoir that can be released by expanding said stored compressed gas in said adjacent expander for generating mechanical work with variable power output.

8. A method as set forth in Claim 1 further comprising the steps of:
recompressing that portion of the expanded vapor which does not condense;
cooling said recompressed vapor;
mixing said cooled recompessed vapor with previously condensed cold vapor discharged from said work generating expansion means; and
recycling said mixture back through said condensing expansion chamber.

9. A method as set forth in Claim 1 further comprising the steps of utilizing said working fluid discharged from said expander means; and utilizing said condensed working fluid as a cooling medium at subambient temperatures.

10. An apparatus for converting natural heat energy of the ambient environment into mechanical work comprising:
means for condensing a portion of working fluid vaporizable at ambient temperature primarily by expanding said working fluid with a sufficiently large expansion ratio to transform said fluid to a supersaturated state so that a portion condenses at a subambient temperature; and
heat engine means for generating mechanical work connected to said condensing means utilizing said condensed working fluid as a low temperature heat reservoir below ambient temperature, and utilizing the natural environment as a high temperature heat reservoir at ambient temperature.

11. An apparatus as set forth in Claim 10 wherein said heat engine means comprises;
means for compressing liquefied cryogenic working fluid to an initial working pressure;
heat exchanger means maintained in thermal contact with the ambient environment for heating said cryogenic working fluid;
means for introducing compressed cryogenic working fluid into said heat exchanger means whereby said working fluid is heated and vaporized to a compressed gas by absorbing natural thermal energy from the ambient environment;
expander means for converting thermal energy of heated cryogenic working fluid into mechanical work;
means for introducing said heated cryogenic working fluid into said expander means whereby a portion of said natural heat energy absorbed form the natural environment is converted into mechanical work; and
means for recycling said expanded cryogenic working fluid discharged from said expander means back into said condensing means.

12. An apparatus as set forth in Claim 11 wherein said condensing means comprises:
an expander means having a sufficiently high expansion ratio to transform said working fluid into a supersaturated vapor, a portion of which condenses; and
means for introducing partially compressed gaseous working fluid into said expander means whereby a portion of the thermal energy of said working fluid is converted into mechanical work.

13. An apparatus as set forth in Claim 10 wherein said condensing means transforms a portion of said working fluid into its solid phase at cryogenic temperature.

14. An apparatus as set forth in Claim 13 further comprising means for melting said solidified working fluid to liquefied working fluid, said melting means comprising:
cryogenic heat exchanger means maintained in thermal contact with a cryogenic secondary working fluid for condensing said secondary working fluid;
means for introducing said solidified working fluid into said cryogenic heat exchanger means for melting

said solidified working fluid to liquefied working fluid by absorbing latent heat of condensation from said secondary working fluid;
means for compressing liquefied secondary cryogenic working fluid to a pressure above atmospheric pressure;
ambient heat exchanger means communicating with said compressing means and maintained in thermal contact with the natural environment for heating compressed secondary cryogenic working fluid by absorbing heat energy from the natural environment;
expander means communicating with said heat exchanger means for converting thermal energy of heated secondary working fluid into mechanical work; and
means for introducing expanded secondary working fluid vapor back into said cryogenic heat exchanger means in a closed cycle, whereby the latent heat of condensation of said secondary working fluid is absorbed by said solidified working fluid thereby liquefying said secondary working fluid and melting said solidified working fluid to liquefied working fluid.

15. An apparatus as set forth in Claim 10 wherein said working fluid is air and further comprising:
means for expelling at least a portion of the air which does not condense after passing through said condensing means into the open atmosphere with a relatively high entropy; and
means for ingesting an equal portion of new air from the atmosphere at a relatively lower entropy such that the amount of air condensed by said condensing means upon repeating the cycle remains substantially constant.

16. An apparatus as set forth in Claim 15 wherein said condensing means comprises:
a vacuum chamber;
means for expanding air into said vacuum chamber with an expansion ratio exceeding 100 such that a portion of said expanded air is transformed into a supersaturated vapor at cryogenic temperature so that a portion of the air condenses inside said vacuum chamber;
means for removing said condensed air from said vacuum chamber; and
means for maintaining the vacuum inside said vacuum chamber by removing uncondensed gaseous air.

17. An apparatus as set forth in Claim 16 wherein said condensing means transforms said air into its solid phase and further comprising:
means for melting said solidified air to liquid air at cryogenic temperature; and wherein said heat engine means comprises:
means for compressing said liquefied air to some initial working pressure above ambient atmospheric pressure;
heat exchanger means communicating with said compressing means and in thermal contact with the natural environment for absorbing natural heat energy from the environment thereby vaporizing said compressed liquefied air to compressed gaseous air;
expansion means for expanding said heated compressed air, thereby converting a portion of the natural heat energy absorbed from the environment into mechanical work; and
means for recycling expanded air back into said condensing means.

18. An apparatus as set forth in Claim 17 wherein said means for melting said solidified air comprises:
secondary cryogenic condensing means;
secondary condensing cryogenic engine means operating with a secondary cryogenic working fluid vaporizable at ambient temperature and utilizing said solidified air for its low temperature heat reservoir and the natural environment at ambient temperature for its high temperature heat reservoir;
means for introducing said solidified air into said secondary condensing means; and
means for introducing expanded secondary working fluid vapor into said secondary condensing means thereby condensing said vapor into liquefied secondary working fluid at cryogenic temperature while simultaneously melting said solidified air to liquefied air.

19. An apparatus as set forth in Claim 18 wherein said secondary condensing cryogenic engine means comprises:
means for compressing said liquefied cryogenic working fluid;
heat exchanger means communicating with said compressing means and in thermal contact with the natural environment for heating said cryogenic fluid by absorbing natural heat energy from the environment thereby vaporizing said fluid into compressed gaseous secondary working fluid;
means for expanding said heated compressed gaseous secondary working fluid, thereby converting a portion of the natural heat energy absorbed from the environment into mechanical work; and
means for recycling expanded secondary working fluid vapor discharged from said expanding means back into said secondary condensing means.

20. An apparatus as set forth in Claim 11 further comprising pressure vessel means interposed operatively between at least one ambient heat exchanger means and its adjacent downstream expander for accumulating and temporarily storing heated compressed gas discharged from said heat exchanger before expanding said gas in said expander for load levelling and as a compessed gas energy storage reservoir that can be released by expanding said stored compressed gas in said adjacent expander for generating mechanical work with variable power output.

21. An apparatus as set forth in Claim 10 further comprising:
means for recompressing that portion of expanded working fluid vapor which does not condense;
means for cooling said recompressed vapor;
means for mixing said cooled recompressed vapor with previously condensed cold vapor discharged from said heat engine means; and
means for recycling said mixture back through said condensing means.

22. An apparatus as set forth in Claim 10 further comprising:
means for utilizing working fluid inside said heat engine means as a cooling medium at subambient temperature; and
means for utilizing condensed working fluid discharged from said condensing means as another cooling medium at subambient temperature.

23. An apparatus for generating mechanical work comprising:
means for condensing at subambient temperature a working fluid vaporizable at ambient temperature by expanding gaseous working fluid with a sufficiently large expansion ratio so that said working fluid is transformed into a supersaturated vapor at subambient temperature so that a portion of the working fluid condenses, while simultaneously generating mechanical work; and
means for generating additional mechanical work by harnessing the thermal potential difference between said condensed working fluid at subambient temperature and the natural environment at ambient temperature by heat engine means.

Fig. 1.

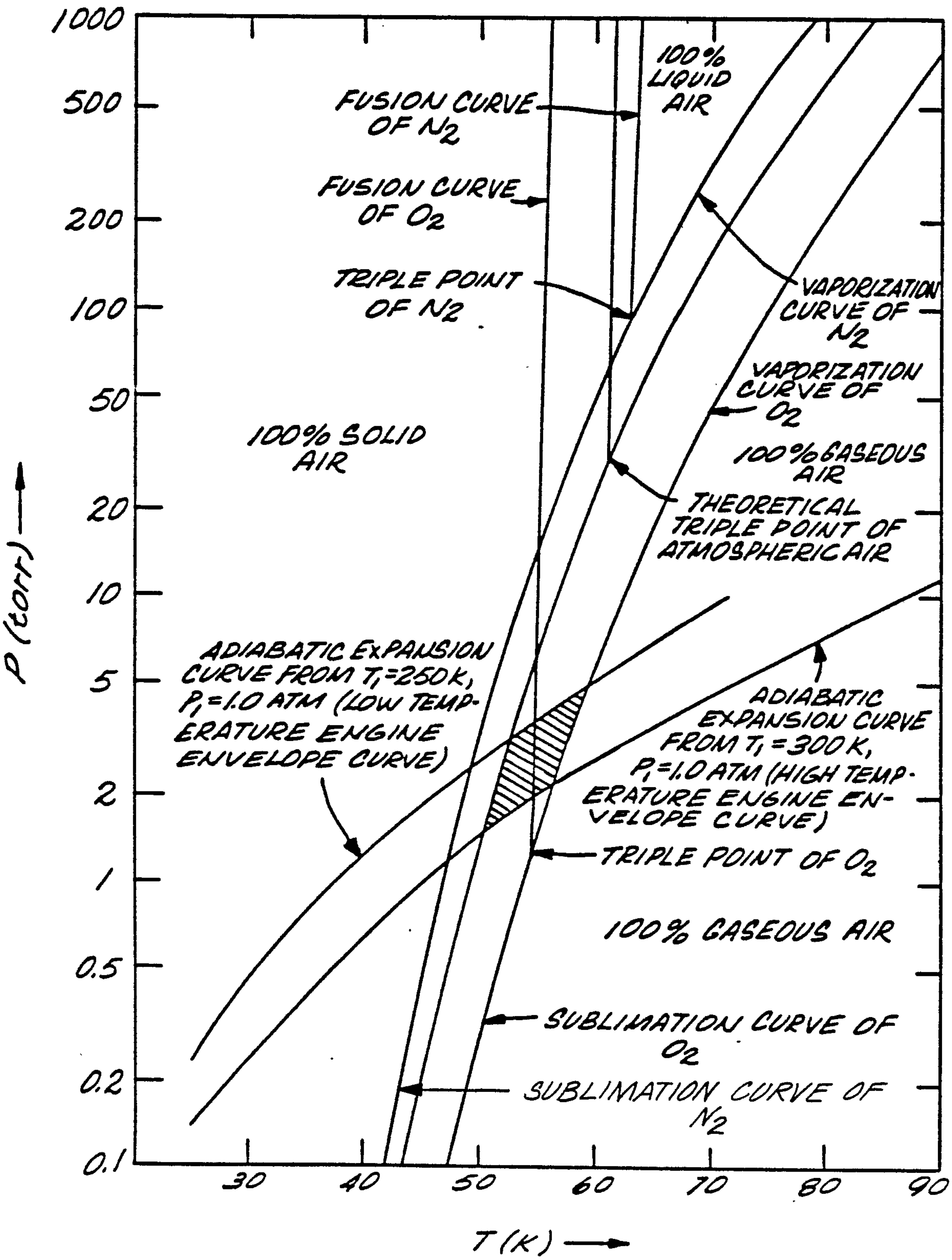
1000
500
200
100
50
20
10
5
2
1
0.5
0.2
0.1
P (torr) →
30
40
50
60
70
80
90
T (K) →
100% LIQUID AIR
FUSION CURVE OF N2
FUSION CURVE OF O2
TRIPLE POINT OF N2
VAPORIZATION CURVE OF N2
VAPORIZATION CURVE OF O2
100% SOLID AIR
100% GASEOUS AIR
THEORETICAL TRIPLE POINT OF ATMOSPHERIC AIR
ADIABATIC EXPANSION CURVE FROM T1=250K, P1=1.0 ATM (LOW TEMPERATURE ENGINE ENVELOPE CURVE)
ADIABATIC EXPANSION CURVE FROM T1=300K, P1=1.0 ATM (HIGH TEMPERATURE ENGINE ENVELOPE CURVE)
TRIPLE POINT OF O2
100% GASEOUS AIR
SUBLIMATION CURVE OF O2
SUBLIMATION CURVE OF N2

Fig.2.

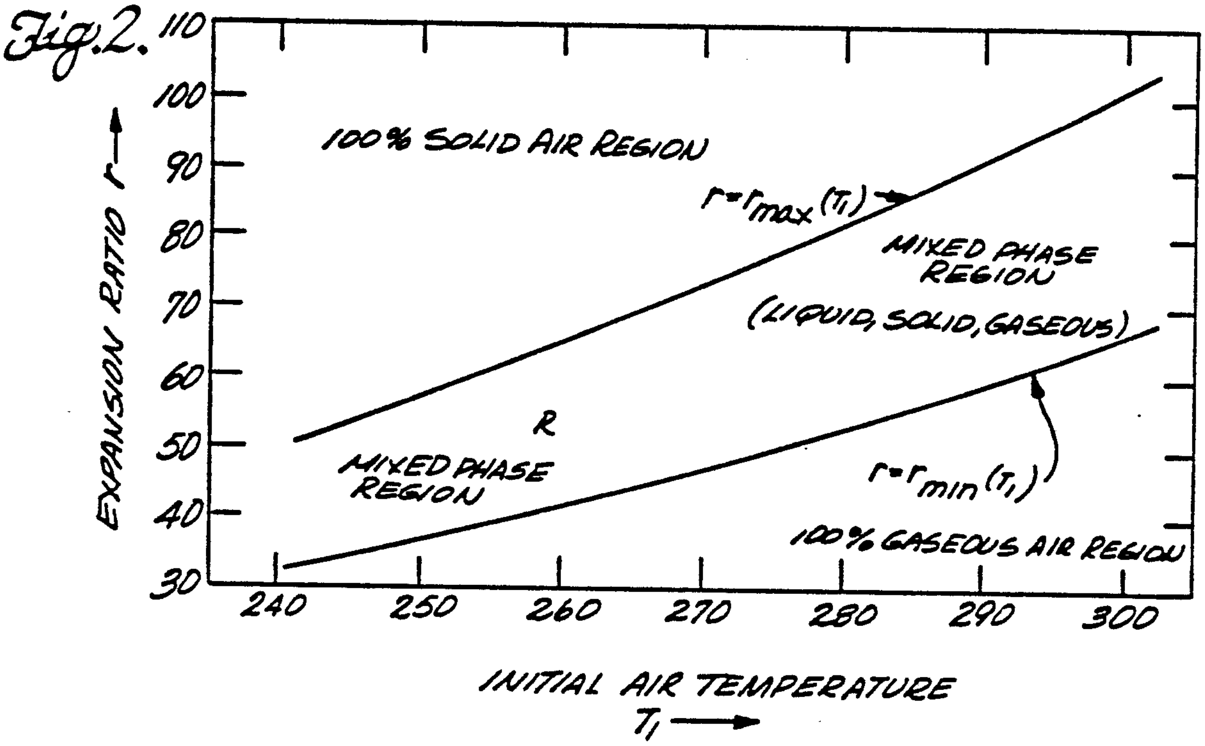
110
100
90
80
70
60
50
40
30
EXPANSION RATIO r
100% SOLID AIR REGION
r=rmax(T1)
MIXED PHASE REGION
(LIQUID, SOLID, GASEOUS)
R
MIXED PHASE REGION
r=rmin(T1)
100% GASEOUS AIR REGION
240
250
260
270
280
290
300
INITIAL AIR TEMPERATURE
T1

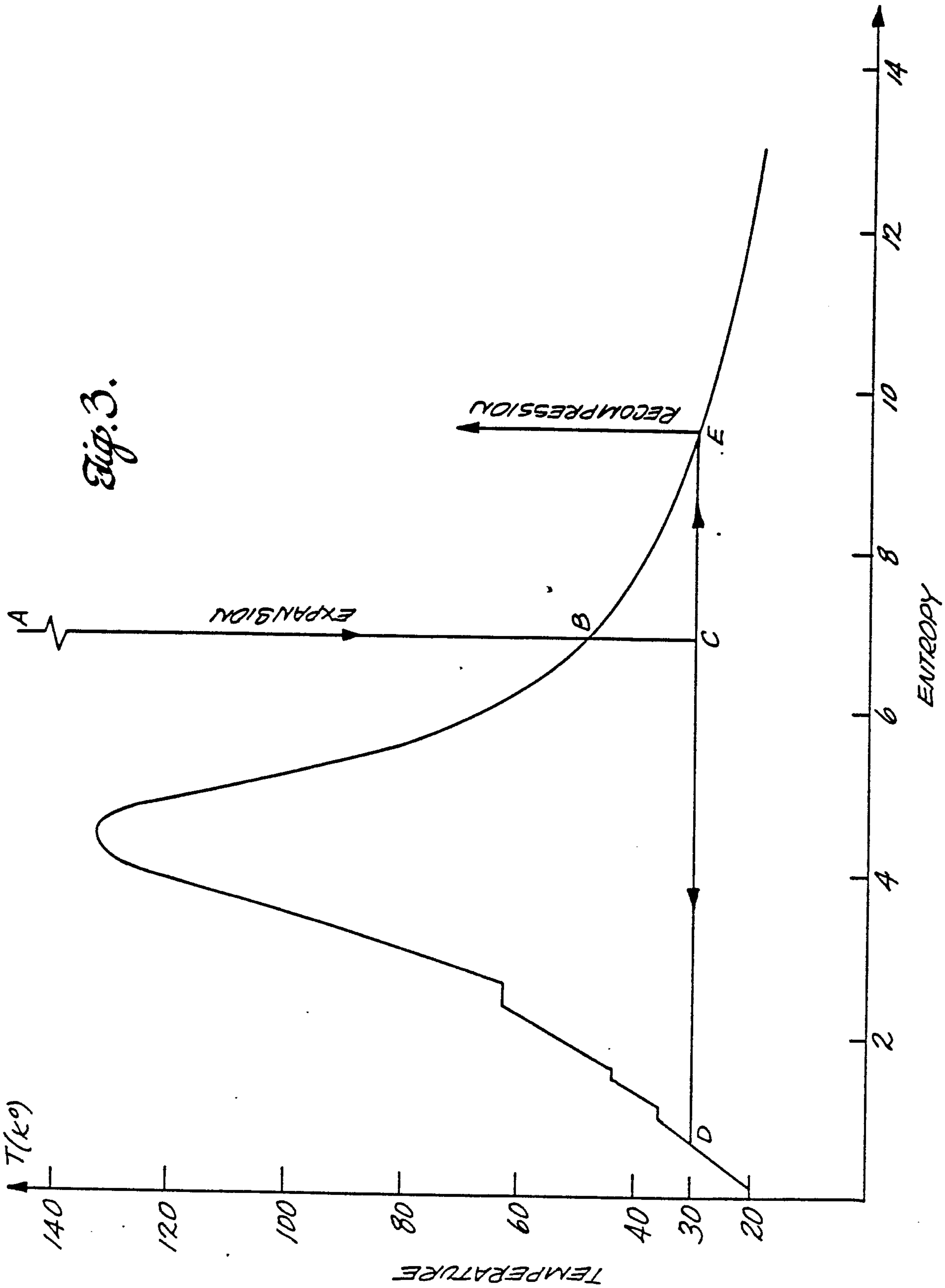
T(K°)
TEMPERATURE
140
120
100
80
60
40
30
20
ENTROPY
2
4
6
8
10
12
14
A
B
C
D
E
EXPANSION
RECOMPRESSION

Fig. 3.

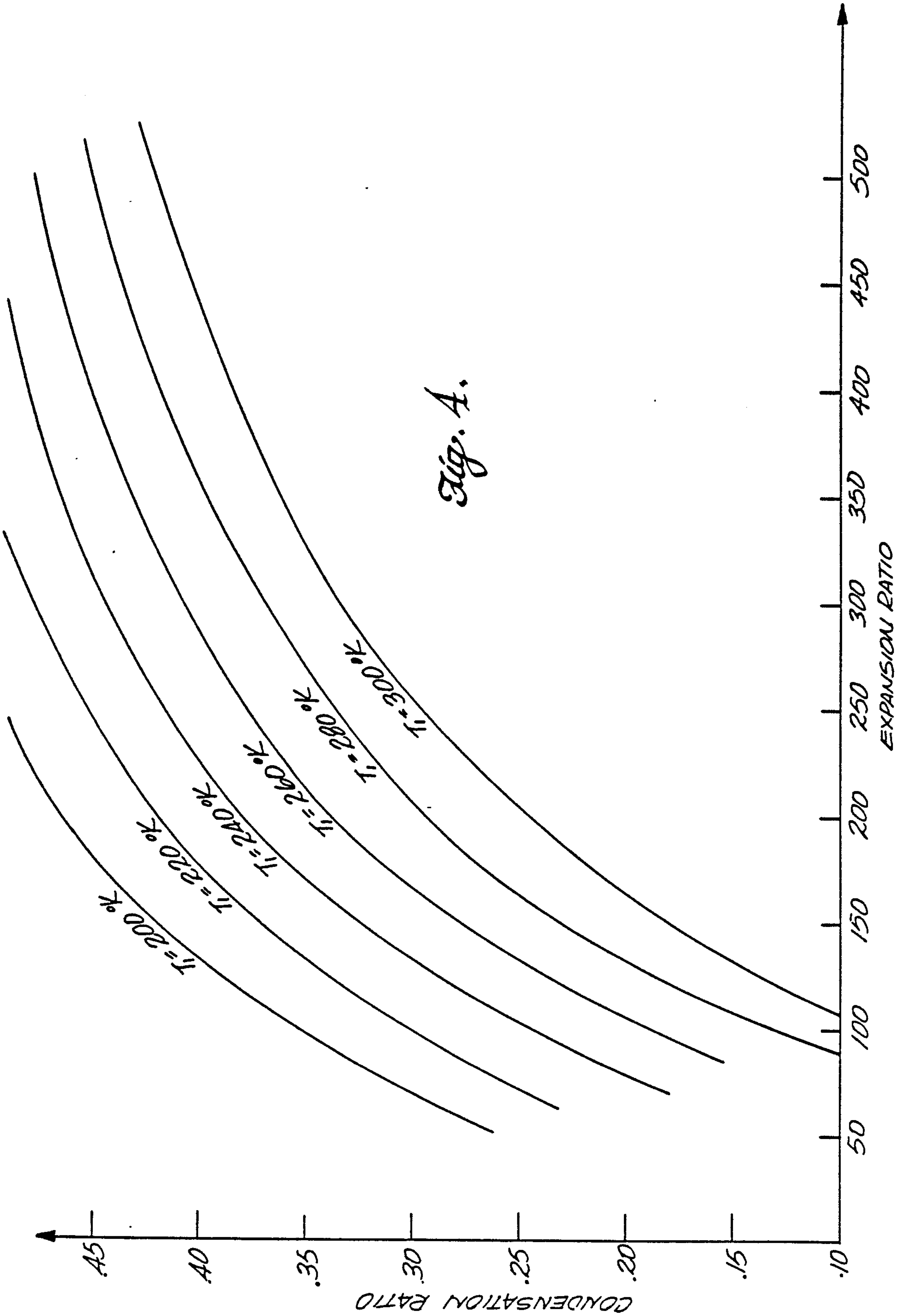
CONDENSATION RATIO
.45
.40
.35
.30
.25
.20
.15
.10
EXPANSION RATIO
50
100
150
200
250
300
350
400
450
500
T₁=200°K
T₁=220°K
T₁=240°K
T₁=260°K
T₁=280°K
T₁=300°K

Fig. 4.

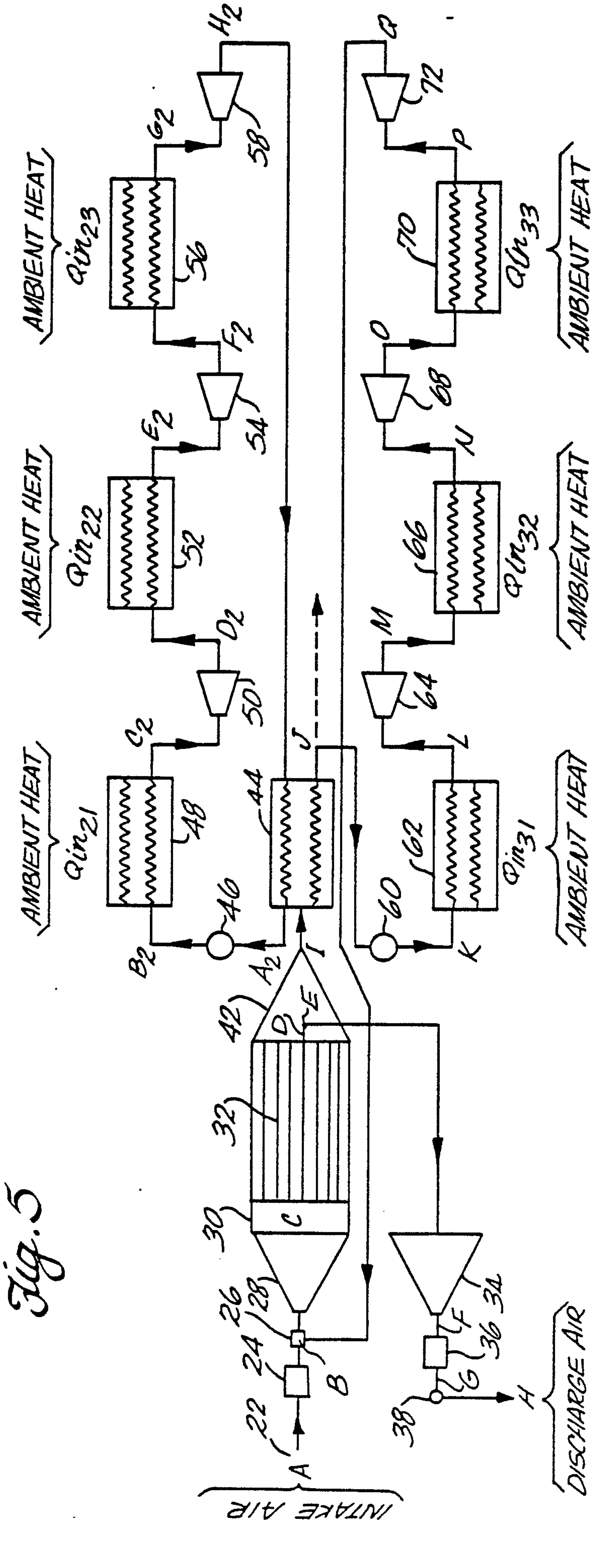
INTAKE AIR
DISCHARGE AIR
AMBIENT HEAT
AMBIENT HEAT
AMBIENT HEAT
AMBIENT HEAT
AMBIENT HEAT
AMBIENT HEAT
Qin21
Qin22
Qin23
Qin31
Qin32
Qin33
A
B
C
D
E
F
G
H
I
J
K
L
M
N
O
P
Q
A2
B2
C2
D2
E2
F2
G2
H2
22
24
26
28
30
32
34
36
38
42
44
46
48
50
52
54
56
58
60
62
64
66
68
70
72

Fig. 5

Fig:6.

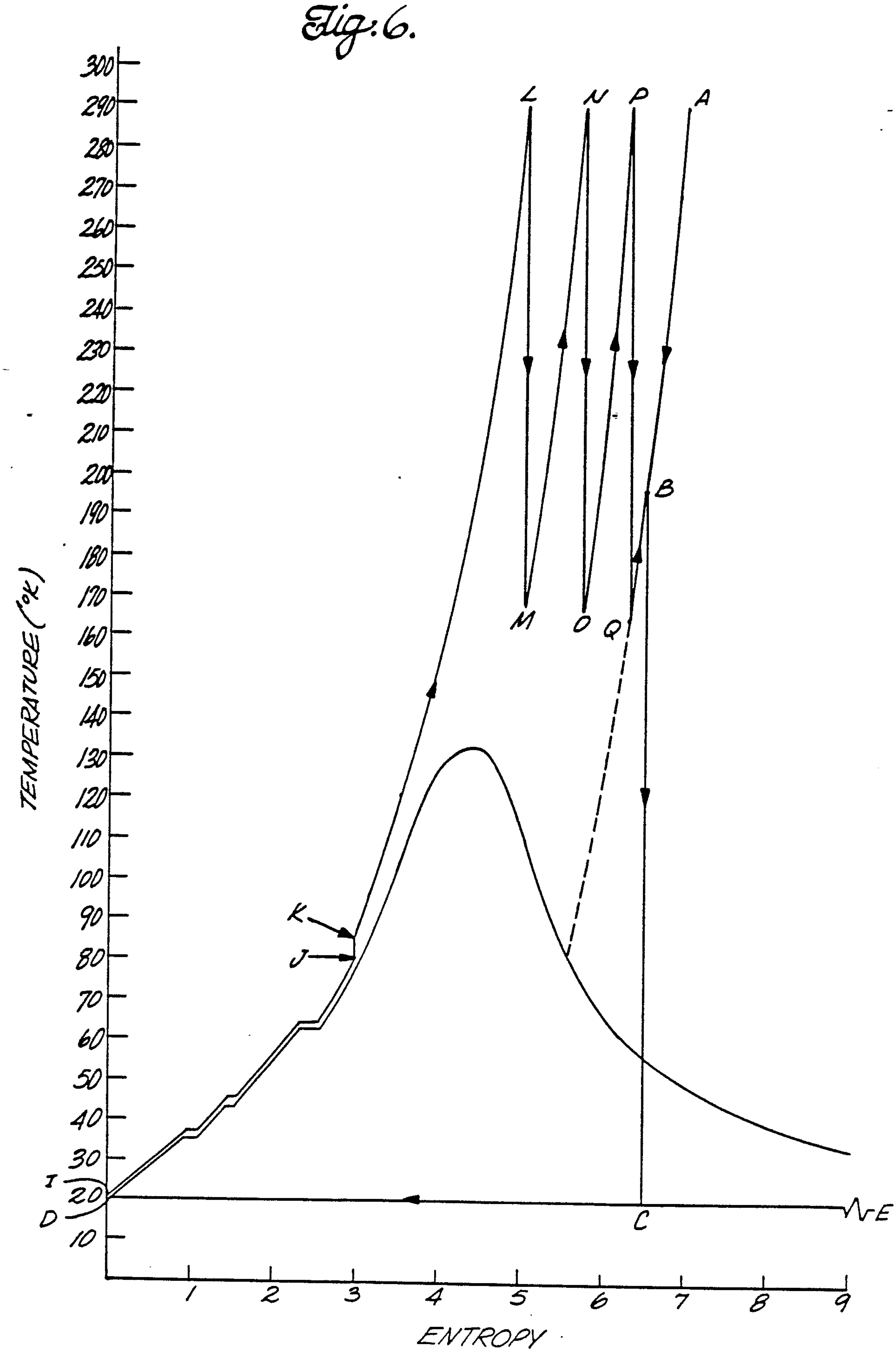
TEMPERATURE (°K)
300
290
280
270
260
250
240
230
220
210
200
190
180
170
160
150
140
130
120
110
100
90
80
70
60
50
40
30
20
10
L
N
P
A
B
M
O
Q
K
J
I
D
C
E
1
2
3
4
5
6
7
8
9
ENTROPY

Fig. 7.

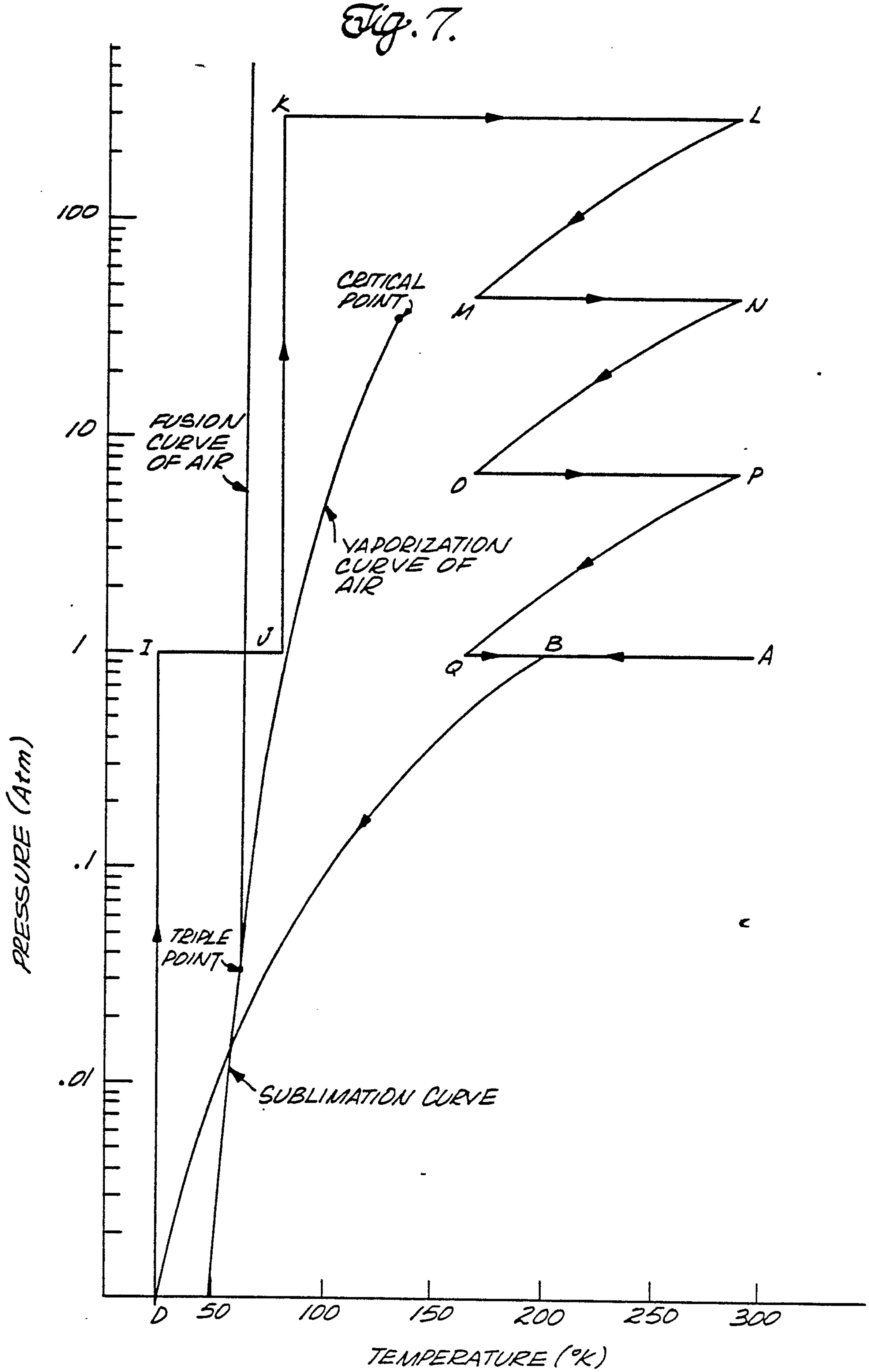
PRESSURE (Atm)
100
10
1
.1
.01
K
L
M
N
O
P
Q
B
A
I
J
CRITICAL POINT
FUSION CURVE OF AIR
VAPORIZATION CURVE OF AIR
TRIPLE POINT
SUBLIMATION CURVE
D
50
100
150
200
250
300
TEMPERATURE (°K)

Fig. 8.

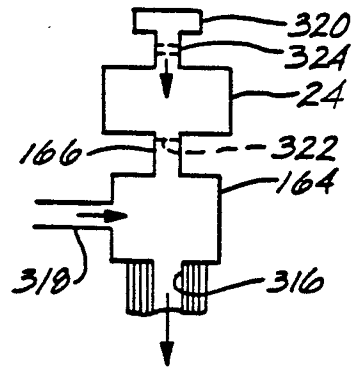
320
324
24
166
322
164
318
316

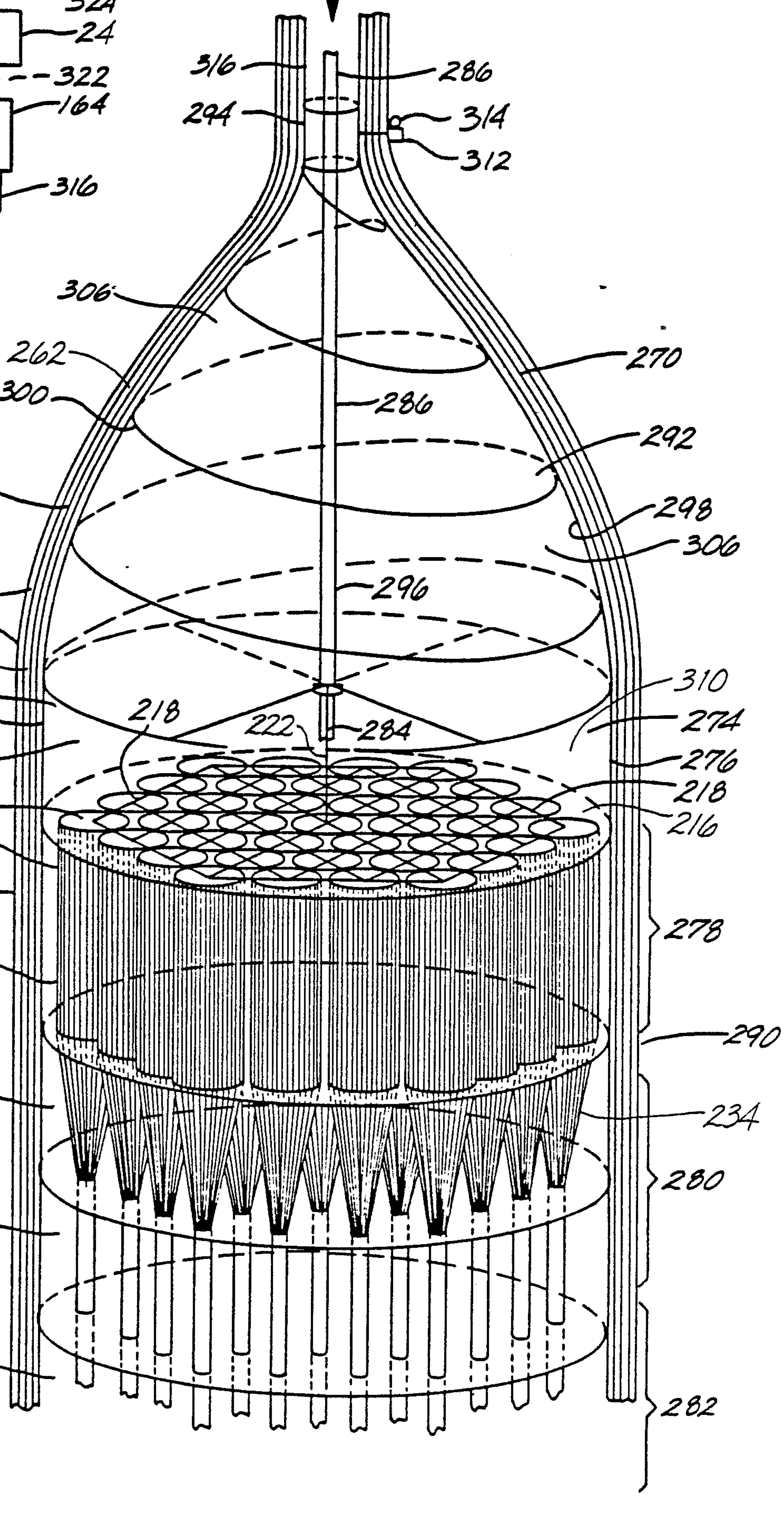
316
286
294
314
312
306
262
270
300
286
292
264
298
306
268
296
266
308
310
276
218
274
222
284
275
276
220
218
192
216
290
278
204
290
277
234
280
277
277
282

Fig. 12.

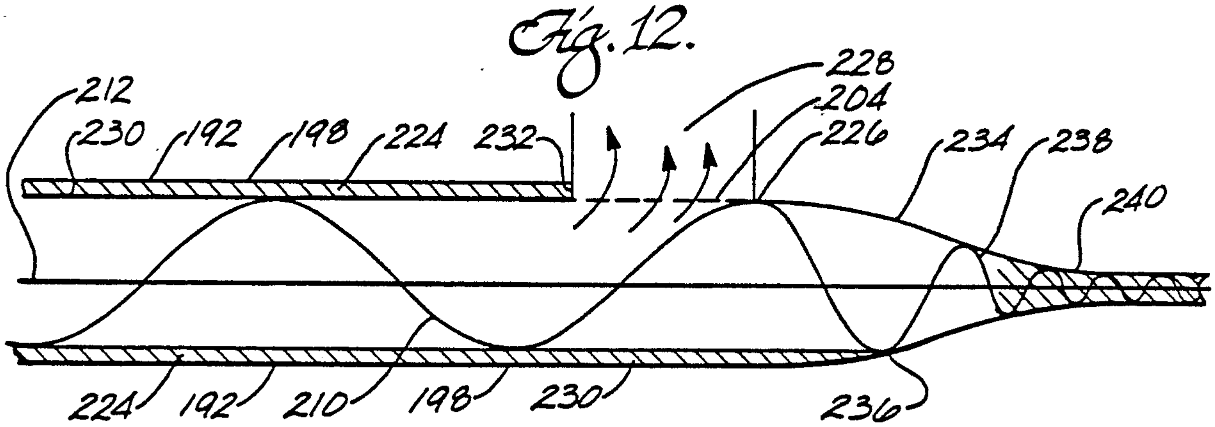
212
230
192
198
224
232
228
204
226
234
238
240
224
192
210
198
230
236

Fig. 9.

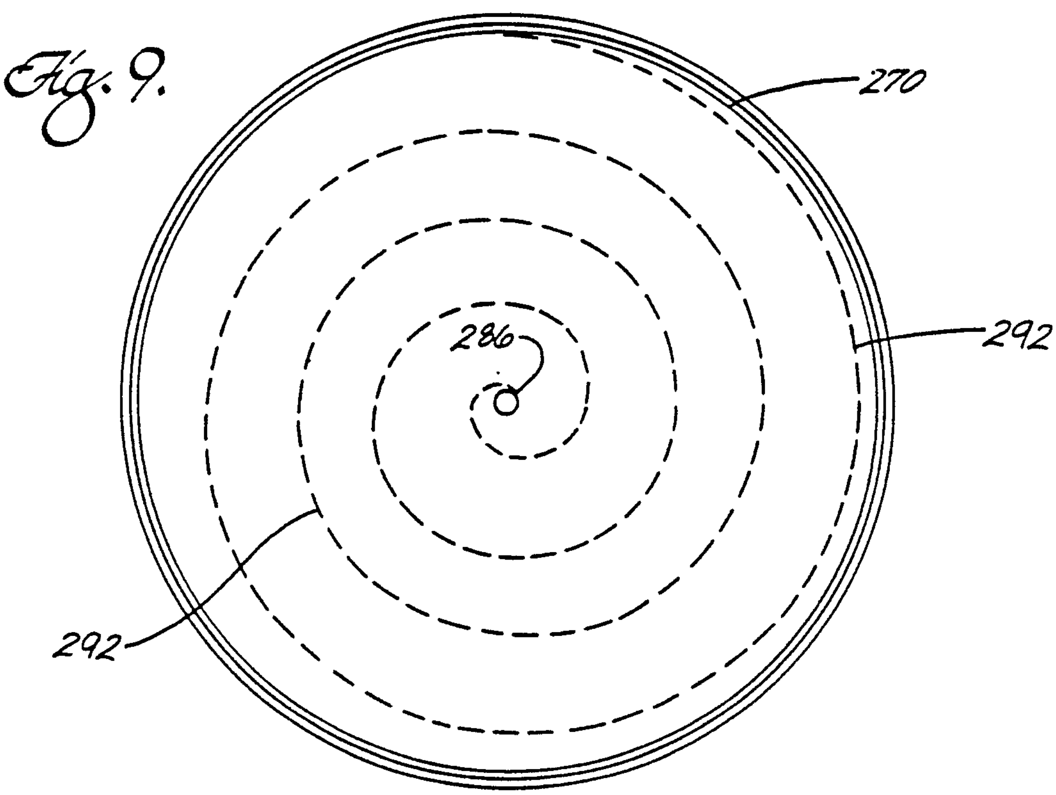
270
292
286
292

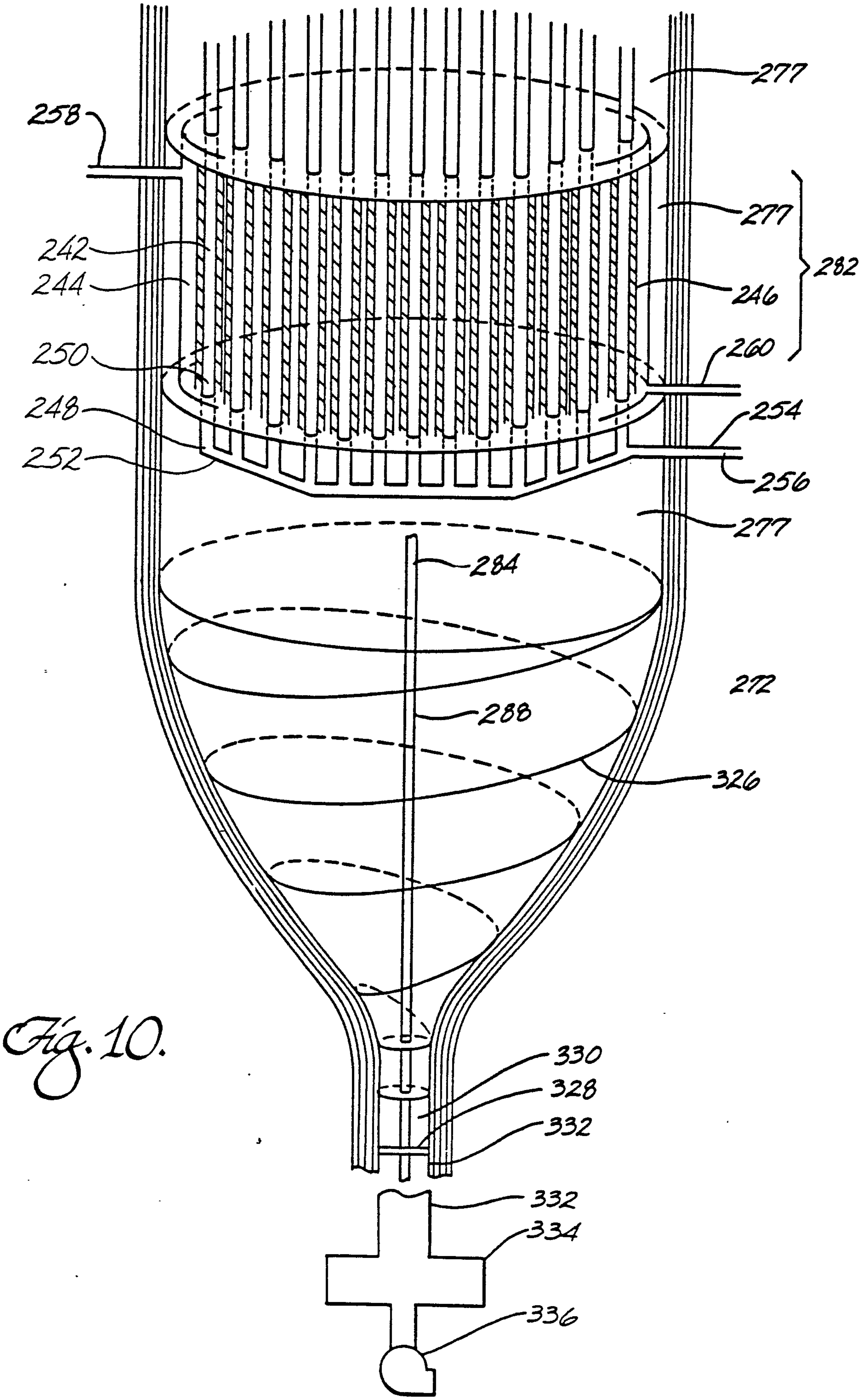
277
258
277
282
242
244
246
250
260
248
254
252
256
277
284
272
288
326
330
328
332
332
334
336

Fig. 10.

Fig. 11.

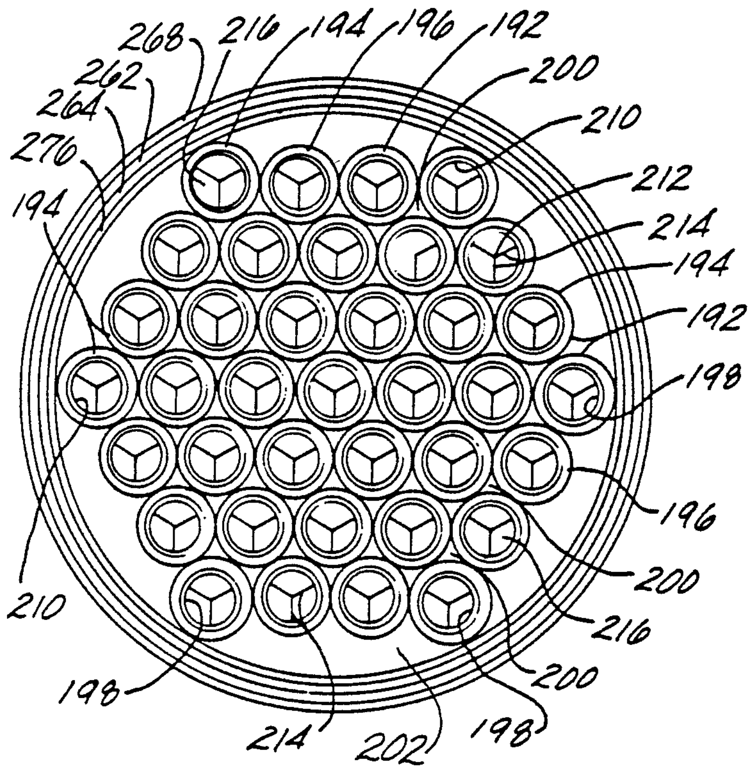
268
216
194
196
192
200
262
264
210
276
212
194
214
194
192
198
196
200
210
216
200
198
214
202
198

Fig. 13.

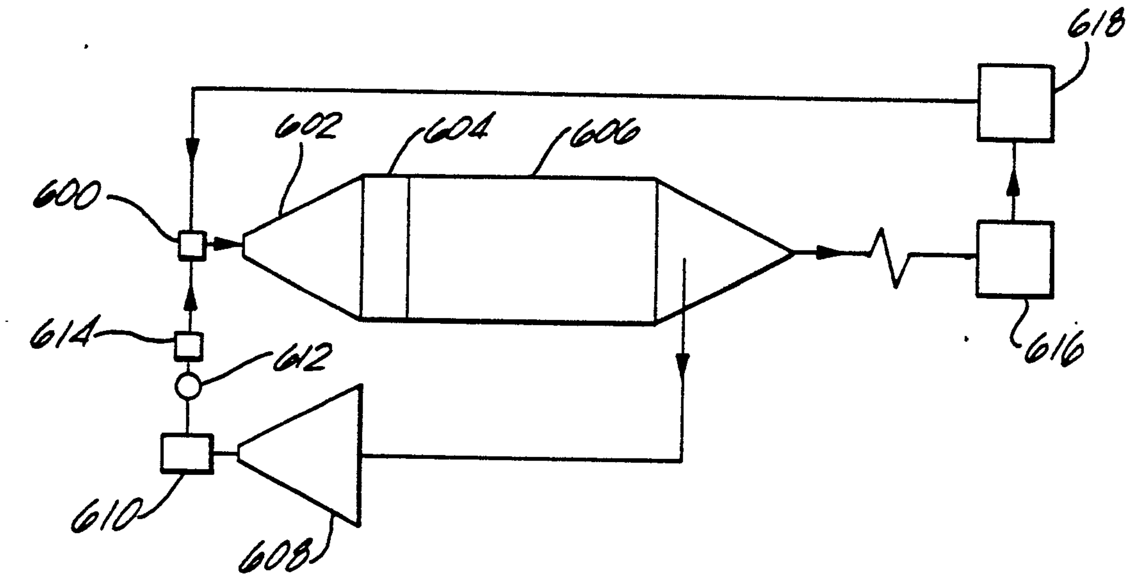
618
602
604
606
600
614
612
616
610
608

Fig. 14.

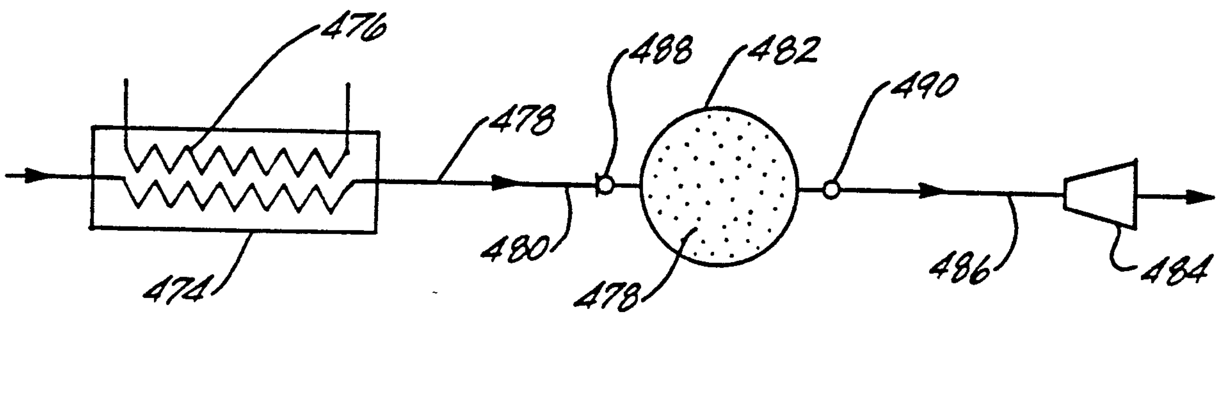
476
488
482
490
478
480
474
478
486
484

European Patent Office

# EUROPEAN SEARCH REPORT

Application number

EP 86 30 8942

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 338 894 (ZUR LIPPE)<br>* Page 1, lines 10-34,85-106; page 2, lines 1-30,38-61 *<br>--- | 1 | F 01 K 25/10<br>F 03 G 7/04 |
| X | US-A-3 878 683 (IMAI)<br>* Figure 1; column 3, lines 15-29,51-57; column 4, lines 3-11,58-68; column 5, lines 1-37 * | 1,7,9 | |
| Y | | 10,11, 20,22, 23 | |
| | --- | | |
| Y | BE-A- 899 622 (GYBELS)<br>* Page 1, paragraph 1; page 4, last paragraph; page 5, lines 1-19; page 6, lines 1-14; figure 1 * | 10,11, 20,22, 23 | TECHNICAL FIELDS SEARCHED (Int. Cl.4)<br>F 01 K<br>F 03 G |
| A | | 2,19 | |
| | --- -/- | | |

The present search report has been drawn up for all claims

| Place of search | Date of completion of the search | Examiner |
|---|---|---|
| THE HAGUE | 08-07-1987 | JORIS J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent Office

# EUROPEAN SEARCH REPORT

Application number

EP 86 30 8942

Page 2

**DOCUMENTS CONSIDERED TO BE RELEVANT**

| Category | Citation of document with indication, where appropriate, of relevant passages | Relevant to claim | CLASSIFICATION OF THE APPLICATION (Int. Cl.4) |
|---|---|---|---|
| X | EP-A-0 001 382 (LECZKOWSKI)<br>* Page 17, lines 4-28; page 18, lines 6-21; page 20, lines 30-37; page 21, lines 1-8,23-37; page 22, lines 1-7,24-37; page 23, lines 1-23; claims 1,2,6,24,28,29 *<br>--- | 1,7,9, 10,13, 23 | |
| E | US-A-4 624 109 (MINOVITCH)<br>* The whole document *<br>----- | 1-23 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 08-07-1987 | JORIS J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82